# EUROPEAN PATENT APPLICATION

(11) **EP 1 772 474 A1**
(43) Date of publication of application: **11.04.2007**
(21) Application number: 04747859.9
(22) Date of filing: 23.07.2004
(51) Int. Cl.: C08G 75/02, C08J 7/14, D01F 6/76, D21H 13/20

(54) **POLYARYLENE SULFIDE OXIDE, SOLID ARTICLE AND PROCESS FOR PRODUCING THE SAME**

(71) Applicant: TORAY INDUSTRIES, INC., Tokyo 103-8666 (JP)
(72) Inventor: MURAOKA, Hideo, Sumitomo Chemical Sone Apt., Toyonaka-shi, Osaka 5610802 (JP); YAMAUCHI, Koji, Toray-shataku, Nagoya-shi, Aichi 4580044 (JP); SUGANO, Koji, Mishima-shi, Shizuoka 4110019 (JP); TAKEDA, Keiji, Shiga 525-0055 (JP)
(74) Representative: Schaeberle, Steffen
(86) International application number: PCT/JP2004/010471
(87) International publication number: WO 2006/011183

(57) **Abstract**

This invention relates to a polyarylene sulfide oxide of which crystallization degree is 10% or higher by wide-angle X-ray diffraction measurement and a heat of fusion is 15 J/g or less by differential scanning calorimeter (DSC) measurements, and a production method of the same. There is provided a polyarylene sulfide oxide that excels in heat resistance, chemical resistance and moisture absorption resistance, and a production method of the same.

## Description

### [Field of the Invention]

The present invention relates to a polyarylene sulfide oxide (hereunder, may also be referred to as PPSO) which is excellent in heat resistance, chemical resistance and moisture absorption resistance and a production method thereof. The polyarylene sulfide oxide of the present invention is useful compound in various fields for industrial uses such as various filters including bag filter, and further, materials for electric field which require moisture absorption resistance.

### [Background Technology]

Since the polyarylene sulfide oxide has a high melting point and a high chemical resistance, its melt-molding or solution-molding was practically difficult, and it was the actual circumstance that a molding after an oxidation reaction treatment was difficult to be applied. Under these circumstances, it can be said to be very meaningful that a polyarylene sulfide compound is made into an article of a predetermined form before the oxidation reaction treatment and subjecting it to the oxidation treatment while maintaining its form to obtain a predetermined article in a desired form.

So far, as oxidation methods of polyarylene sulfide in a presence of a liquid, an oxidation method by dropping, after polyphenylene sulfide sulfone (hereunder, referred to as PPSS) is dissolved in concentrated sulfuric acid, an aqueous solution of hydrogen peroxide (for example, refer to the patent references 1 and 2), a method of dissolving polyphenylene sulfide (hereunder, referred to as PPS) in concentrated nitric acid and oxidize it (for example, refer to the patent reference 3), a method of oxidizing PPS with hydrogen peroxide or a hypochlorite (for example, refer to the patent reference 4), a method of oxidizing PPS with peracetic acid or a equilibrium peracetic acid solution prepared with an aqueous hydrogen peroxide solution and acetic acid (for example, refer to the patent references 5 to 9), an oxidation method of oxidizing PPS, after oxidizing it with ozone, by any one of the methods of the patent references 5 to 7 (for example, refer to the patent reference 10), or the like, are proposed.
[Patent reference 1] Specification of BP No. 1234008 (P5 -8)
[Patent reference 2] Specification of BP No. 1365486 (P2 -3)
[Patent reference 3] JP-A-H10-87998 (P5)
[Patent reference 4] JP-B-S60-35370 (P5- 8, Tables 1-3)
[Patent reference 5] JP-A-H10-87832 (P3)
[Patent reference 6] JP-A-H7-3027 (P6)
[Patent reference 7] JP-A-H5-230760 (P3)
[Patent reference 8] JP-A-2000-328444 (P5 - 6, Table 1)
[Patent reference 9] JP-A-S63-182413 (P6 - 9)
[Patent reference 10] JP-A-H7-3024 (P6 - 7)

### [Disclosure of the Invention]

### [Problem to be Solved by the Invention]

However, in the methods of the patent references 1 to 3, since polyarylene sulfide compound was once dissolved in a liquid, there was a problem that shapes before the oxidation reaction treatment could not be maintained. On the other hand, the methods of the patent references 4 to 10 are methods in which shapes before the oxidation reaction treatment can be maintained. However, in the method of the patent reference 4, there arose a problem in physical properties of the product such that only a part of surface of an article was oxidized, and the product was very brittle to may cause a crack. And, in the methods described in the patent references 5 to 9, an example of oxidation reaction in which peracetic acid, or a equilibrium peracetic acid solution prepared from a mixture of an aqueous hydrogen peroxide solution and acetic acid is described, but by only subjecting to such a treatment, a polyarylene sulfide oxide having sufficient physical properties could not be obtained. And, the polyarylene sulfide oxide obtained by the patent references 5 to 9, had a problem to be high in moisture absorption. That is, it had a substantial problem in dimensional change of solid article by the moisture absorption, or in decrease of electric properties of solid article by the moisture absorption. As described above, the methods proposed so far, have many problems in physical properties in the obtained polyarylene sulfide oxide and their production method, and all of them were improper to be practically used. Therefore, the present invention aims to provide a polyarylene sulfide oxide which has satisfactory characteristics for industrial use. In addition to that, the present invention aims to produce this polyarylene sulfide oxide, while keeping safety of producing process, by an efficient and simple method.

### [Means for Solving the Problem]

We, the inventors, as a result of making every effort for solving these problems, found a polyarylene sulfide oxide which has satisfactory characteristics for industrial use. And, we found that the polyarylene sulfide oxide could be produced while keeping safety of the production process, by an efficient and simple method.

That is, the present invention is a polyarylene sulfide oxide of which the crystallization degree by wide-angle X-ray diffraction measurement is 10% or higher and the heat of fusion by differential scanning calorimeter (DSC) measurement is 15 J/g or less.

Furthermore, the present invention is a solid article of the above-mentioned polyarylene sulfide oxide which has a shape selected from a powder, a fiber, a fabric, a film and a paper.

Furthermore, the present invention is a method of producing a solid article wherein a solid article of polyarylene sulfide oxide, of which crystallization degree by wide-angle X-ray diffraction measurement is 10% or higher and heat of fusion by differential scanning calorimeter (DSC) measurement is 15 J/g or less, is produced by an oxidation reaction treatment of an solid article of polyarylene sulfide compound in a presence of a liquid containing an oxidant, while maintaining its shape.

### [Effect of the Invention]

As described above, the polyarylene sulfide oxide is a useful compound for industrial uses, and by the present invention, it becomes possible to obtain a polyarylene sulfide oxide more excellent in high heat resistance, chemical resistance, moisture absorption resistance and electrical insulation property, to thereby obtain a solid article useful in various industrial applications. In addition, the production method of the present invention is a production method of a solid article of the polyarylene sulfide oxide having a predetermined shape by using industrially easy available reagents, by a simple and efficient process and by an industrially excellent method. And it can be said to be very valuable that a desired oxidation product can be obtained by an oxidation reaction treatment in a safe process while maintaining the shape before oxidation.

### [Best Embodiment for Carrying Out the Invention]

Hereunder, the present invention is described in detail.

### <Polyarylene sulfide compound>

In the present invention, the polyarylene sulfide compound used as the reaction material is a homopolymer comprising a repeating unit shown in the general formula (1) as the main constituting unit

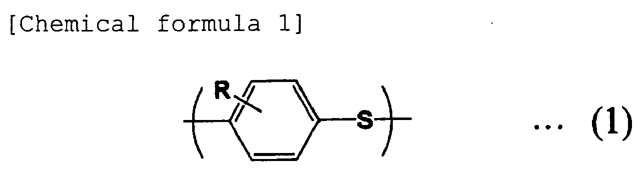

(R denotes at least any one of hydrogen, a halogen, an aliphatic substituent substituted in an admitted valence range with an arbitrarily selected functional group and an aliphatic substituent substituted with an aromatic substituent), or a copolymer of the above-mentioned repeating unit with 1.0 mol or less, preferably 0.3 mol or less, based on 1.0 mol of the above-mentioned repeating unit, of the repeating unit shown in the general formulas (2) to (8)

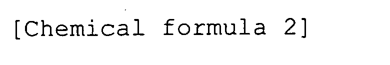

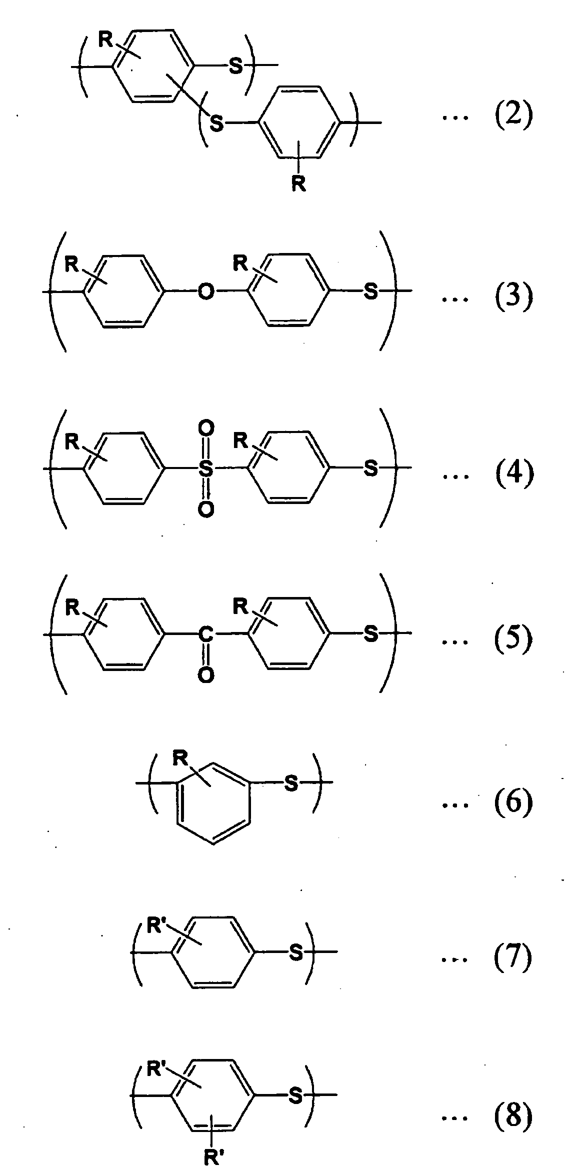

(R' denotes at least any one of hydrogen, a halogen, an aliphatic substituent substituted in an admitted valence range with an arbitrarily selected functional group and an aliphatic substituent substituted with an aromatic substituent).

The substituents, R and R', are preferably hydrogen or aliphatic substituent with 1-4 carbon atoms, for example, hydrogen, methyl group, ethyl group, n-propyl group, isopropyl group, n-butyl group, isobutyl group and t-butyl group are mentioned. Among them, preferred are methyl group, ethyl group, isopropyl group and tert-butyl group and more preferred is methyl group. As examples of polyarylene sulfide compounds, poly-p-phenylene sulfide, poly-p-tolylene sulfide, poly-p-chlorophenylene sulfide, poly-p-fluorophenylene sulfide or the like are mentioned, and among them, preferred are poly-p-phenylene sulfide, poly-p-tolylene sulfide, and more preferred is poly-p-phenylene sulfide.

In addition, the solidarticle of polyarylene sulfide compound used in the present invention may be in any shape of a powder, a fiber, a fabric, a film, a paper, other molded article, etc. As examples of the fiber state, winded state such as that winded on a bobbin, a hank or the like are mentioned. As examples of the fabric, a non-woven fabric, a woven fabric, a knitted fabric or the like are mentioned. As the solid article, it is especially preferable to have a shape selected from a fiber, a fabric, a film and a paper. To the solid article, as far as they do not spoil the effect of the present invention, various additives or other polymer may be contained.

Furthermore, the polyarylene sulfide compound constituting the solid article, preferably has physical properties of a crystallization degree of 30% or more and a weight average molecular weight (Mw) of 30,000 or more, and more preferably has a crystallization degree of 50% or more. Furthermore, itispreferable that the weight average molecular weight is 40,000 or more. Conventionally, for increasing efficiency of the oxidation reaction treatment to thereby shorten the reaction time, it was known to use, as a starting material, a polyarylene sulfide of low crystallization degree. However, we, inventors, found that, on the contrary, by using the polyarylene sulfide compound having a high crystallization degree, i.e., having a crystallization degree and a molecular weight of the above-mentioned range, the crystallization ratio and the molecular weight were not spoiled by the oxidation reaction treatment, and as a result, physical properties of the obtained polyarylene sulfide oxide were greatly improved. On the contrary, it was also found that when a polyarylene sulfide of low crystallization degree is used as the starting material, the crystallization degree is further decreased by successive oxidation reaction treatment, and as a result, the product is very brittle to greatly spoil physical properties of the obtained product. And further, it was found that, when the crystallization degree of the polyarylene sulfide before the reaction was high, because the polymer molecules were disposed regularly, a crosslinking reaction became easy to start. By becoming the crosslinking higher, the physical properties of the obtained polyarylene sulfide oxide is further improved. Such a solid article of polyarylene sulfide having such a crystallization ratio and weight average molecular weight can be obtained, for example, by the following method.

That is, by using sodium hydrosulfide as a sulfur source and p-dichlorobenzene as an organic monomer, by using sodium acetate as a polymerization auxiliary agent at the polymerization, by using 0.04 mol times or more of the polymerization auxiliary agent to the sodium hydrosulfide, and by polymerizing for 4 hours under the condition of an excessive ratio of the p-dichlorobenzene of 2.0 mol% or more to the sodium hydrosulfide, it is possible to obtain a polyphenylene sulfide having a weight average molecular weight (Mw) of 30,000 or more.

And, for obtaining a solid article of a polyarylene sulfide having a crystallization ratio of 30% or more, although it depends on a shape of the solid article, for example, in case where the solid article is a fiber or a film, it is possible to obtain those articles according to publicly known methods by controlling a drawing speed or a draw ratio, or by controlling a heat treatment condition after the drawing.

In case where the solid article is a fiber or a fabric, the fiber thickness (single fiber thickness) constituting the article is preferably 0,1 to 10 dtex, more preferably, 0.5 to 9 dtex, still more preferably 1 to 7 dtex, and especially preferably, 2.0 to 6.0 dtex.

### <Reaction liquid>

In the present invention, as the liquid used for the oxidation reaction treatment, those which maintain the shape of the solid article of polyarylene sulfide can arbitrarily be used, but it is preferable that the liquid is capable of uniformly dissolving the oxidant used in the oxidation reaction treatment, and, among them, a liquid containing an organic acid, an organic acid anhydride or a mineral acid is preferable. In addition, the liquid may be any of a single component or a mixture. Furthermore, it may be water or a mixture containing water. As examples of the liquid, water, acetone, methanol, ethanol, acetonitrile, tetrahydrofuran, chloroform, N-methylpyrrolidone, ethyl acetate, pyridine and the following organic acids and organic acid anhydrides are mentioned. As examples of the organic acid, formic acid, acetic acid, trifluoroacetic acid, propionic acid, lactic acid, maleic acid or the like are mentioned. As the organic acid anhydride, an acid anhydride shown in the following general formula (a),

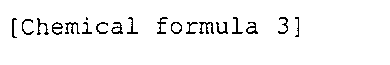

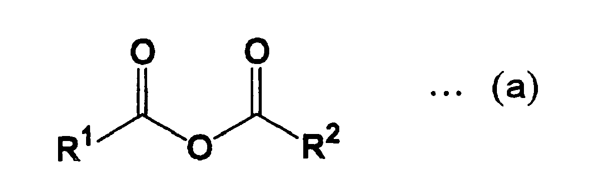

(R₁ and R₂ respectively denotes any one of an aliphatic substituent with 1 to 5 carbon atoms, an aromatic substituent and an aliphatic substituent substituted with an aromatic substituent, and R₁ and R₂ may be connected to form a ring structure) is mentioned and as their examples, acetic anhydride, trifluoroacetic anhydride, propionic anhydride, lactic anhydride, maleic anhydride, succinic anhydride, phthalic anhydride, benzoic anhydride, chlorobenzoic anhydride or the like are mentioned. As examples of mineral acid, nitric acid, sulfuric acid, hydrochloric acid, phosphoric acid and the like are mentioned. Preferred are water, acetic acid, trifluoroacetic acid, acetic anhydride, trifluoroacetic anhydride, sulfuric acid and hydrochloric, and more preferred are water, acetic acid, trifluoroacetic acid and sulfuric acid. Among them especially preferred is a liquid in which water, acetic acid and sulfuric acid are mixed. As the mixing composition ratio, preferred is 5 to 20 wt% of water, 60 to 90 wt% of acetic acid and 5 to 20 wt% of sulfuric acid, and a specif ically good result can be obtained in a concentration of this range.

### <Oxidant>

As the oxidant used in said reaction, those which can be uniformly dissolved in the above-mentioned liquid and those which can provide a polyarylene sulfide oxide having physical properties specified by the present invention, can arbitrarily be used. It is preferable to be a combination of an oxidant and a liquid which is capable of carrying out oxidation reaction treatment of a solid article of polyarylene sulfide while maintaining its shape. As the oxidant, it is preferable to be at least one selected from an inorganic salt peroxide and aqueous hydrogen peroxide solution, and it may be a peroxide (including peracid) obtained from a mixture of at least one kind selected from an inorganic salt peroxide and aqueous hydrogen peroxide solution with at least one kind selected from an organic acid and an organic acid anhydride. As the inorganic salt peroxide used as the oxidant, a persulfate salt, a perborate salt and a percarbonate salt are preferably mentioned. As the salt mentioned here, an alkali metal salt, an alkali earth metal salt, an ammonium salt or the like are mentioned but, among them, a natrium salt, a potassium salt and an ammonium salt are preferable. As those examples, sodium persulfate, potassium persulfate, ammonium persulfate as persulfate salts, sodium perborate, potassium perborate and ammoniumperborate as perborates, sodiumpercarbonate, potassium percarbonate as percarbonates, etc., are mentioned. As examples of peracid formed from a mixture of aqueous hydrogen peroxide solution with an organic acid or an organic acid anhydride, performic acid, peracetic acid, pertrifluoroacetic acid, perpropionic acid, perlactic acid, perbenzoic acid, per-m-chlorobenzoic acid or the like are mentioned. Among them, preferred are sodium persulfate, sodium perborate, performic acid, peracetic acid, pertrifluoroacetic acid, and more preferred are sodium perborate, peracetic acid and pertrifluoroacetic acid.

### <Concentration of oxidant>

The concentration of oxidant is important for safety management in industrial production. A high concentration is preferable in view of treatment efficiency, but depending on the shape of solid article of polyarylene sulfide or its apparent volume, it is arbitrary and possible to dilute with a liquid so that the solid article is sufficiently immersed in the liquid containing the oxidant or to lower the concentration in view of safety.

When a peracid is used as the oxidant, it is preferable that the concentration of peracid is 20 wt% or less, more preferably, it is 0.1 to 10 wt%, and still more preferably, 3 to 8 wt%. In a concentration in this range, it is possible to provide a good reaction result and to establish a process having a high safety. If it is higher than that, its stability or safety becomes very vulnerable to a temperature, and especially a high concentration of peracid of more than 20 wt% is not preferable because of difficulty of controlling stability or of safety management of the process.

When an inorganic salt peroxide is used as the oxidant, it is arbitrary and possible to dilute with a liquid so that the shape or apparent volume of the solid article of polyarylene sulfide compound is sufficiently immersed in the liquid or to lower the concentration in view of safety.

In case where a peracid or a peroxide, formed from a mixture of aqueous hydrogen peroxide solution and an organic acid, is used, it is preferable that a concentration of the peracid or the peroxide is 10 wt% or less.

In case where a peracid or a peroxide, formed from a mixture of aqueous hydrogen peroxide solution and an organic acid anhydride, is used, it is preferable that a concentration of the peracid or the peroxide is 0.1 wt% to 20 wt%, more preferably 3 wt% to 15 wt%, especially preferably 3 wt% to 8 wt%.

In a concentration in this range, it is possible to provide an especially good reaction result and to establish a process having a high safety. If it is becomes higher than that, its stability or safety becomes very vulnerable to a temperature, and especially a high concentration of peracid of more than 20 wt% is not preferable because of difficulty of controlling it stability or of safety management of the process.

For example, when a differential scanning calorimeter (DSC-60 of Shimazu Corp.) is used and an amount sample in a range of 5 mg to 8 mg is weighed in air circumstance, the thermal behavior of peracetic acid solution measured by setting a temperature program to 30°C to 200°C (at a temperature elevation rate of 10°C/10 min, from 30°C to 200°C) by using a stainless steel 4.9 MPa (50 atoms) pressure resistant airtight container is that, in case of 40% peracetic acid solution, the pyrolysis temperature is 110°C and the calorific value is 770 J/g. In case of a equilibrium peracetic acid solution adjusted to the theoretical peracetic acid concentration to 40% by using an equal amount of acetic acid and 34.5% aqueous hydrogen peroxide solution, the pyrolysis temperature is 133°C and the calorific value is 704 J/g. On the other hand, in case of a mixed liquid adjusted to the theoretical peracetic acid concentration to 40% by using acetic anhydride and 34.5% aqueous hydrogen peroxide solution, the pyrolysis temperature is 132°C and the calorific value is 445 J/g which is about 60% of the above mentioned calorific values. In addition, those of the theoretical peracetic acid concentration of 9% are that, a pyrolysis temperature is 110°C and 230 J/g which is about 1/3 of the calorific values, and it is very small. Accordingly, it is very important to secure the safety of the oxidation reaction treatment process by lowering the concentration of the oxidant.

### <Reaction temperature and time>

There is no specific limitation to the oxidation reaction treatment, as far as it is possible to obtain a polyarylene sulfide oxide having the characteristics specified in the present invention, but it is preferable that the oxidation reaction treatment is carried out under the boiling point of the liquid used. In case where the temperature is above the boiling point, the reaction system must be pressurized, and a pyrolysis of the oxidant may be accelerated or a complicated apparatus may become necessary, in addition, regarding the safety, a strict process management may become necessary. A concrete oxidation reaction treatment temperature depends on the boiling point of the liquid used, but, in a range allowable by the boiling point of the liquid, between 0°C to 100°C, further, between about 30°C to 80°C, especially, 40°C to 70°C is preferable. For example, in case where the liquid is acetic acid, an oxidation reaction treatment temperature of 50°C to 70°C is preferable and an especially good reaction result can be obtained at a temperature in this range.

There is no specific limitation to the oxidation reaction treatment time, as far as it is possible to obtain the polyarylene sulfide oxide having the characteristics specified by the present invention, and a concrete time also cannot necessarily be said because it depends on the reaction temperature and the concentration of the oxidant, but, for example, in case where the liquid is acetic acid, it is about two hours under a condition of 60°C and 10 wt% of the oxidant concentration.

In general, about 1 to 8 hours is preferable under a condition of 60°C and 5 wt% of the oxidant concentration. Furthermore, in case where a peracid formed from a mixture of an acid anhydride shown by the above-mentioned general formula (a), as the oxidant, and hydrogen peroxide are used, it is preferable to carry out the oxidation reaction treatment efficiently and in a short time while keeping safety. For example, in case where the equilibrium peracetic acid solution in which the theoretical peracetic acid concentration is adjusted to 40% using same weight of acetic acid and 34.5% aqueous hydrogen peroxide solution, the time for carrying out the oxidation reaction treatment of any one of a fiber bundle, a fabric and a felt is about 8 hours under a temperature condition of 60°C, but in case of a mixed liquid in which the theoretical peracetic acid concentration is adjusted to 40% using same weight of acetic acid anhydride and 34.5% aqueous hydrogen peroxide solution, it is about 2 hours and very efficient.

### <Oxidation reaction treatment system>

There is no specific limitation to the treatment system for carrying out the oxidation reaction treatment, but it is possible to apply a batch system, a continuous system or their combination. And, any of a one stage system and a multi-stage system can be applied.

Here, the batch system means a treatment system in which the solid article of polyarylene sulfide compound and a liquid containing the oxidant are fed to an arbitrary reactor, and after the oxidation reaction treatment at an arbitrary concentration, temperature and time, the polyarylene sulfide oxide or the liquid is taken out. The continuous system means a treatment system in which the oxidation reaction treatment is carried out by passing the solid article of polyarylene sulfide compound or the liquid which contains the oxidant through a reactor at an arbitrary flow rate. In the continuous system, any one of a method of the oxidation reaction treatment in which the liquid which contains the oxidant is passed through or circulated around the solid article of polyarylene sulfide compound which is fixed in an arbitrary shape, and a method of the oxidation reaction treatment in which the liquid which contains the oxidant is fed to an arbitrary reactor and, therethrough, the solid article of polyarylene sulfide compound is continuously passed or circulated.

Furthermore, the multi-stage system means a process in which a unit process of the oxidation reaction treatment of the batch system or the continuous system is built up plurally or stepwise. Concretely, a method is exemplified in which the oxidation reaction treatment is divided into plural stages and at carrying out the each treatment, the liquid, which contains the oxidant, for carrying out the oxidation reaction treatment is newly prepared, and subsequent oxidation reaction treatment is carried out. Such a method is preferable in view of accelerating the oxidation reaction, and concretely, it is preferably used in view of shortening the oxidation reaction treatment time or making it possible to react at a lower temperature. In particular, this multi-stage process is preferable for diluting with a liquid so that the solid article of polyarylene sulfide is sufficiently immersed notwithstanding its shape and apparent volume, or for preventing an extension of the oxidation reaction treatment time which may arise by lowering the concentration to keep safety, or for making an excessive temperature elevation unnecessary. And by adopting this process, it is possible to build up a process, while keeping the safety, without an extension of the oxidation reaction time or a temperature elevation.

Furthermore, as a method of contacting the solid article of polyarylene sulfide compound with the liquid containing the oxidant in the oxidation reaction treatment, any one of a method of immersing the solid article of polyarylene sulfide compound in the liquid which contains the oxidant and a method of scattering or spraying the liquid which contains the oxidant to the solid article of polyarylene sulfide compound which is fixed in an arbitrary shape, can be applied.

Next, the polyarylene sulfide oxide which is obtainable by the present invention is explained.

### <Polyarylene sulfide oxide>

By the above-mentioned oxidation reaction treatment, thioether portion of the polyarylene sulfide is oxidized and the polyarylene sulfide oxide is obtained. By an oxidation reaction treatment of more preferable embodiment, not only the thioether portion of the polyarylene sulfide compound is oxidized, but also a crosslinking between the polymer chains is also formed.

That is, the polyarylene sulfide oxide obtainable by the present invention is a polymer comprising the repeating unit shown by the general formula (9),

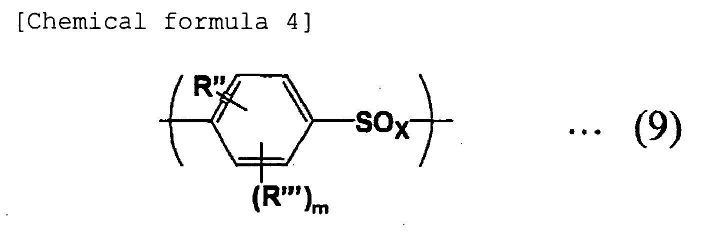

(R" denotes any one of hydrogen, a halogen, an aliphatic substituent substituted with an arbitrary functional group in an acceptable range of valence, an aliphatic substituent substituted with an aromatic substituent, and R" between polymers may be connected to form a crosslinking structure. And, R" may be a polymer chain of polyarylene sulfide oxide. R"' denotes a polymer chain of polyarylene sulfide oxide and m denotes an integer of 0 to 3. And, X denotes any one of 0, 1, and 2) or a copolymer comprising the above-mentioned repeating unit as the main constituent and 1.0 mol or less, preferably 0.3 mol or less of the repeating unit shown in the general formula (10) to (16) based on 1 mol of the above-mentioned repeating unit.

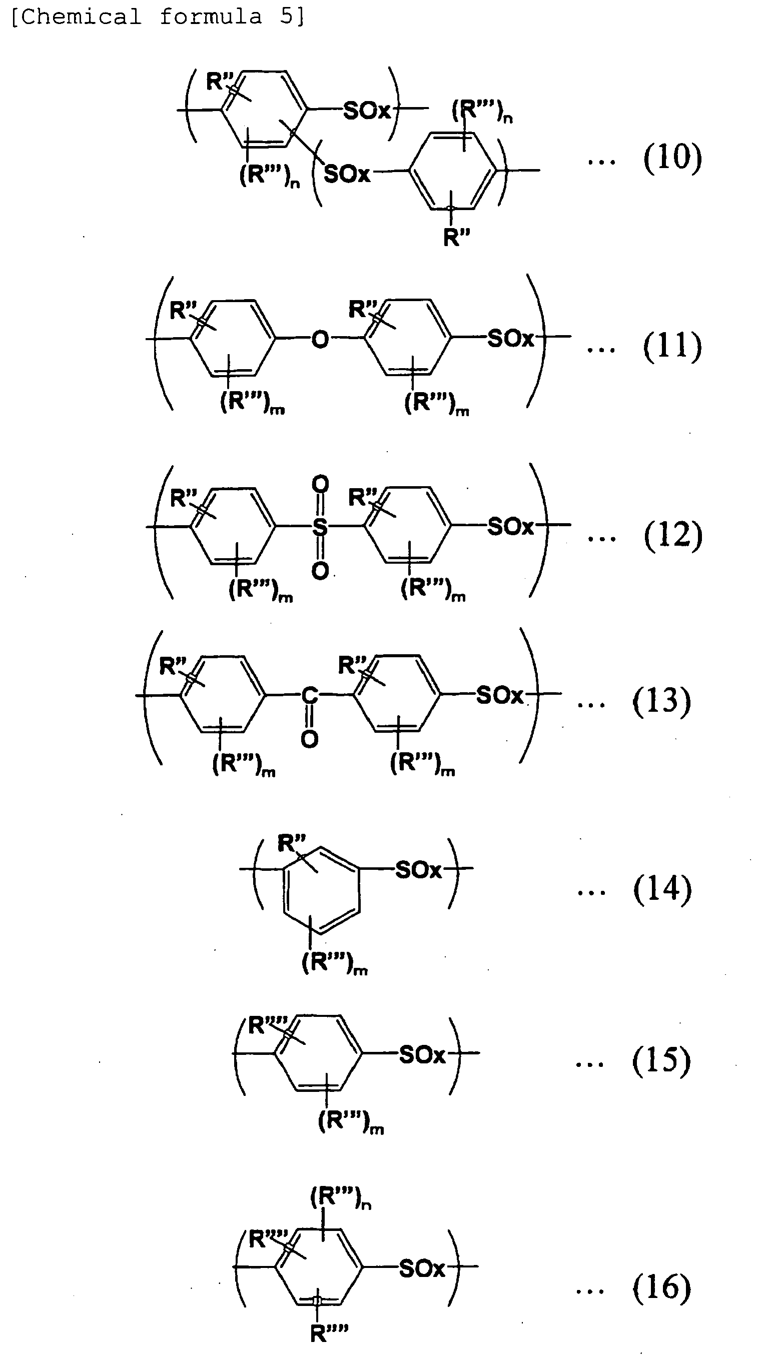

(R" denotes any one of hydrogen, a halogen, an aliphatic substituent substituted with an arbitrary functional group in an acceptable range of valence, an aliphatic substituent substituted with an aromatic substituent, R"" denotes an aliphatic substituent substituted with an arbitrary functional group in an acceptable range of valence, R or R" between polymers may be connected with each other to form a crosslinking structure. And, R" and R"" may be a polymer chain of polyarylene sulfide oxide. R"' denotes a polymer chain of polyarylene sulfide oxide and m denotes any one of integer of 0 to 3, n denotes any one of integer of 0 to 2. And, X denotes any one of 0, 1, and 2). Furthermore, in the repeating unit shown in the general formula (9), a ratio of the repeating unit in which X is 1 or 2 to the repeating unit in which X is 0, 1 or 2 is preferably 0.5 or more, more preferably, 0.7 or more.

### <Amount of char residue of polyarylene sulfide oxide>

The crosslinking which arises in the oxidation reaction treatment process of the present invention means that a crosslinked structure is formed between polymer molecules in the process of the oxidation reaction treatment of polyarylene sulfide compound, i.e., it means atoms selected from any one of carbon atom, sulfur atom and oxygen, which are contained the structure of the repeating unit, are connected with each other to form a crosslinked structure. The degree of crosslinking can be partly grasped by a solid NMR analysis and a thermogravimetric analysis (TGA) of said polyarylene sulfide oxide. Among them, in the TGA measurement, by weighing the amount of char residue after TGA evaluation in nitrogen circumstance, the ratio of C-C crosslinked structure in the crosslinked structure can be grasped. For example, as for the amount of char residue, when in nitrogen circumstance, about 10 mg of sample is precisely weighed, and measured by a simultaneous thermogravimetry/differential thermal analyzer (DTG-50 of Shimazu), on a platinum cell under a temperature program of 30°C to 900°C (from 30°C to 900°C at temperature elevation rate of 10°C/min), in case of PPS fiber ("Torcon" (tradename) of Toray Industries, Inc.), it is substantially quantitatively consumed by heat and no residue is detected, but in one example of PPSO fiber obtained after the oxidation reaction treatment of the present invention, 13.2 wt% of a carbide remains, and it can be confirmed that C-C crosslinked structure is formed by the oxidation reaction treatment. As for saidpolyarylene sulfide oxide, it is preferable that the char residue can be recognized by the TGA measurement. In addition, it is preferable that there is 1 wt% ormore of the char residue, especially, it is preferable that there is 5 wt% or more of the char residue. In this range, it has especially excellent characteristics in heat resistance and chemical resistance. The amount of char residue described here means, in the above-mentioned thermogravimetric analysis (TGA), the weight % of the char residue after the analysis based on the weight of the polyarylene sulfide oxide before the analysis.

### <Crystallization degree of PPSO>

The polyarylene sulfide oxide obtained by the present invention hascrystallinity. That is, the crystallization degree by wide angle X-ray diffraction measurement is 10% or more, preferably, 30% or more, more preferably, 50% or more. In this range, as for physical properties of the polyarylene sulfide oxide, particularly excellent characteristics are exhibited. The crystallization degree mentioned here is the value calculated from areal ratio of the peak originated from crystal structure observed in wide angle X-ray diffraction measurement based on the total diffraction peak area. For example, it is possible to calculate from areal ratio of the peak originated from crystal structure when a film of 70 µm sample thickness is measured by a wide angle X-ray diffraction instrument (RINT2100 of Rigaku Corp.) with Cu light source (λ=1.5406 angstroms). In the present invention, it is possible to obtain a polyarylene sulfide oxide having a high crystallization degree by, as described above, using a polyarylene sulfide having a relatively high crystallization degree and molecular weight for the oxidation reaction treatment, and by selecting an oxidation condition so that the crystallinity of the polyarylene sulfide would not be excessively spoiled.

### <Degree of infusibility of PPSO>

Furthermore, saidpolyarylene sulfide oxidemeans those of which heat of fusion, in differential scanning calorimeter (DSC) measurement, is 15 J/g or less, preferably, 10 J/g or less, more preferably, 5 J/g or less, especially preferably, it means an polyarylene sulfide oxide which has a heat of fusion of 1 J/g or less, more preferably, a compound in which no substantial peak of fusion is observed. In this range, it has especially excellent properties in heat resistance and chemical resistance. Here, the DSC measurement condition is, in nitrogen circumstance and 20 mL/min nitrogen flow rate, using a differential scanning calorimeter (RDC220 of Seiko Instruments), in the range of 5 mg to 10 mg of sample, a temperature program is set to 30°C to 500°C (after elevating temperature from 30°C at 10°C/min to 340°C, held for 2 minutes, then after lowering temperature at 10°C/min to 30°C, held for 2 minutes, and the temperature is elevated again at 10°C/min to 500°C), and a heat of fusion is measured. Such a polyarylene sulfide oxide of which heat of fusion is 15 J/g or less can be produced by making its oxidation reaction treatment condition to the above-mentioned preferable condition.

### <Application of PPSO>

The polyarylene sulfide oxide obtained by such a method has extremely high heat resistance, and has excellent chemical resistance to alkali, concentrated sulfuric acid and concentrated nitric acid, and is a useful compound in various fields for industrial applications, and can be widely used in applications which require heat resistance and chemical resistance. Further more, since it also is excellent in moisture absorption resistance, dimensional change by moisture absorption is small, and decrease of electrical properties by moisture absorption is small, it can be widely applied to electric material uses. In addition, since it maintains the shape before oxidation reaction treatment, by imparting a desired shape before the oxidation reaction treatment, a solid article of the desired shape can be obtained. Concretely, it can be used for filter uses such as a bag filter, a chemical liquid filter, a filter for foods, a chemical filter, an oil filter, an engine oil filter, an air cleaning filter, paper uses such as an electrical insulating paper, heat resistant working wear uses such as a firewear, a drier canvas, a paper-making felt, a sewing thread, a heat resistant felt, a releasing material, a battery separator, a heart patch, an artificial brood vessel, an artificial skin, a material for print substrate, a copier rolling cleaner, safe clothes, a working wear for experiment, a thermal wear, a flame proof ing wear, an ion exchanger substrate, an oil retainer, a heat insulating material, a battery separator, a protecting film, a heat insulating material for construction, a cushion material, a liquid absorbing core, a brush, etc. Among them, the uses for a filter, a paper and a heat resistant working wear are preferable, and further, it is preferably used as a heat resistant bag filter as filter use, an electrical insulating paper as paper use, a firewear as heat resistant working wear, but it is not limited to these uses. These solid articles may contain various additives or other polymer, as far as it does not spoil the effect of the present invention.

### [EXAMPLES]

Hereunder, the present invention is explained in detail with reference to Examples, but the present invention is not limited thereto. Here, each of the maker grades of the reagents used here, corresponds to first grade.

### (1) Condition for measuring differential scanning calorie (DSC)

Using a differential scanning calorimeter (RDC220 of Seiko Instruments), in nitrogen circumstance and 20 mL/min nitrogen flow rate, 5 mg sample was weighed and a heat of fusion is measured according to the DSC curve when the sample was subjected to a temperature program: after elevating temperature from 30°C at 10°C/min to 340°C, held for 2 minutes, then after lowering temperature,at 10°C/min to 30°C, held for 2 minutes, and the temperature is elevated again at 10°C/min to 500°C.

### (2) Condition for measuring thermal gravimetry (TGA)

Using a simultaneous thermogravimetry/differential thermal analyzer (DTG-50 of Shimazu), in nitrogen circumstance, about 10 mg of sample is precisely weighed, and thermal gravimetric change was measured according to the TGA curve when the sample was subjected, on a platinum cell, to a temperature program of 30°C to 900°C at a temperature elevation rate of 10°C/min. The wt% of char residue after measurement to the weight of polyarylene sulfide oxide before measurement was calculated and it was defined as the amount of char residue.

### (3) Condition for measuring wide angle X-ray diffraction

Using a wide angle X-ray diffraction instrument (RINT2100 of Rigaku Corp.), X-ray diffraction was measured with Cu light source (λ = 1.5406 angstrom) , and the crystallization degree was calculated from an areal ratio (%) of the peak originated from crystal structure occupied in the total diffraction peak area.

### (4) Evaluation condition of chemical resistance

A solid article of polyarylene sulfide compound or a solid article of polyarylene sulfide oxide subjected to oxidation reaction treatment was respectively immersed in 10% aqueous caustic soda solution, 30% aqueous caustic soda solution, 48% aqueous sulfuric acid solution, concentrated sulfuric acid, 10% nitric acid and concentrated nitric acid (59% nitric acid), respectively, at 93°C for one week, and observed the shapes of sample when immersed and when picked up with tweezers to evaluate chemical resistance. Here, classification of chemical resistance is that, a case where the shape was maintained both in the chemical liquid and when picked up with tweezers was classified as o mark, a case where the shape was maintained in the chemical liquid but it was deformed when picked up with tweezers was classified as Δ mark, and a case where the sample was dissolved in the chemical liquid was classified as x mark, and the results were shown.

### (5) Condition for measuring electrical insulation

It was measured according to the method of JIS K6911. In case of volume resistivity, it was measured at a direct voltage of 100V, a main electrode diameter of 50 to 70 mm, an electrode load of 5 kgf and under a temperature condition around room temperature. In case of dielectric strength, it was measured at a main electrode, diameter of 20 to 25 mm, an electrode load of 250 to 500g, an electric source frequency of 60 Hz, a voltage elevation rate of 0.2 to 1.0 kV/s and at a temperature condition around room temperature.

### (6) Condition for measuring weight average molecular weight

The weight average molecular weight (GPC) was measured by using an eluent and sample solution prepared by the following apparatus, operation and condition.

### 1) Preparation of eluent

Activated aluminum (1/20 weight to 1-CN) was added to 1-chloronaphthalene (1-CN) and after it was stirred for 6 hours, filtered by G4 glass filter. It was degassed using an aspirator while being washed with an ultrasonic washer.

### 2) Preparation of sample solution

5 mg of polymer and 5g of 1-CN was weighed into a sample bottle. This was put into a high temperature filtering apparatus (SSC-9300 of Senshu Scientific Co.) heated to 210°C and heated for 5 minutes (preheating for 1 minute, stirring for 4 minutes). The sample was taken out from the high temperature filtering apparatus and was left to reach to room temperature.

### 3) Measuring circumstance of GPC

| | |
|---|---|
| Apparatus: | SSC-7100 of Senshu Scientific Co. |
| Column name: | GPC3506 x 1 of Senshu Scientific co. |
| Eluent: | 1-chloronaphthalene (1-CN) |
| Detector: | Differential refractive index detector |
| Sensitivity of detector: | Range 8 |
| Polarization of detector: | + |
| Column temperature: | 210°C |
| Temperature of pre-constant temperature bath: | 250°C |
| Temperature of pumping-type constant temperature bath: | 50°C |
| Temperature of detector: | 210°C |
| Flow rate of sample side: | 1.0 mL/min |
| Flow rate of reference side: | 1.0 mL/min |
| Amount of injected sample: | 300 µL |
| Sample for preparing calibration curve: | Polystyrene |

### (7) Moisture absorbability

A solid article of polyarylene sulfide oxide was treated in a high temperature/high moisture bath (20°C,65 RH%) for 24 hours, and its moisture absorbability was measured. The moisture absorbability was calculated by [(weight after treatment - weight before treatment)/weight before treatment] x 100 (%).

### Example 1

800 mL of acetic acid (product of Kanto Chemical Co.) and 46.16g of sodium perborate 4-hydrate (0.30 mmol; product of Mitsubishi Gas Chemical Co.) were fed to a reactor and stirred at 60°C to be dissolved. Next, 4.03g of poly-p-phenylene sulfide (PPS) fiber ("Torcon" (trademark) of Toray Industries, Inc. ; fiber length, about 200m; single fiber thickness, 4 . 5 dtex) was immersed in this reaction solution, and subjected to an oxidation reaction treatment at 60°C for 10 hours. The fiber weight increased 24.3%, and 5.01g of poly-p-phenylene sulfone (PPSO) fiber was obtained. In this fiber, in measurement of differential scanning calorimeter (DSC), the peak of fusion around the melting point of PPS (285°C) disappeared, no peak of fusion was observed at any temperature measured, and it was an infusible fiber. In addition, it showed an excellent characteristics in chemical resistance, too, i.e., to all the above-mentioned chemicals of which chemical resistance to be evaluated, its shape was completely maintained both in the chemical liquids and when taken out from the chemical liquids. Furthermore, as a result of measurement of thermogravimetric analysis (TGA), the amount of char residue was 10.2 wt% based on the PPSO fiber. Furthermore, the moisture absorbability was about 5.1%. And, a wide angle X-ray diffraction was measured. Although it is described later, a moisture absorbability of the PPS fiber is about 0.8%, and although the moisture absorbability becomes relatively high by the oxidation of PPS fiber, it is still an absorption resistance of sufficient level in practical level.

### Example 2

Instead of PPS fiber, using 3.65g of PPS fabric ("Torcon" (tradename) of Toray Industries, Inc.; size, 12.5 x 4.0 cm; single fiber thickness, 3.0 dtex), an oxidation reaction treatment was carried out in the same way as Example 1. The weight of fabric increased 29.0% to obtain 4.71g of a fabric of polyarylene sulfide oxide (PPSO fabric) . In this fabric, in DSC measurement, the melting point of PPS disappeared, no peak of fusion was observed at any temperature measured, and it was an infusible fabric. In addition, it was a fabric of which shape was perfectly maintained with no substantial change of size before and after the treatment. Furthermore, with respect to the chemical resistance, the amount of char residue by TGA measurement, the moisture absorbability, etc., they were also evaluated in the same way as Example 1.

### Example 3

Instead of PPS fiber, using 4.79g of PPS felt ("Torcon" (tradename) of Toray Industries, Inc.; size, 9.5 x 9.0 cm; single fiber thickness, 2.2 dtex), an oxidation reaction treatment was carried out in the same way as Example 1. The weight of felt increased 30.5% to obtain 6.25g of a felt of polyarylene sulfide oxide (PPSO felt). In this felt, in DSC measurement, the melting point of PPS disappeared, no peak of fusion was observed at any temperature measured, and it was an infusible felt. In addition, it was a felt of which shape was perfectly maintained with no substantial change of size before and after the treatment. Furthermore, with respect to the chemical resistance, the amount of char residue by TGA measurement, the moisture absorbability, etc., they were also evaluated in the same way as Example 1.

### Example 4

Instead of sodium perborate 4-hydrate, sodium perborate 1-hydrate (product of Mitsubishi Gas Chemical Co.) was used and an oxidation reaction treatment was carried out in the same way as Example 1. The weight of fiber increased 24.0% and a similar infusible PPSO fiber was obtained. It was evaluated in the same way as Example 1.

### Example 5

By shortening the reaction time from 10 hours to 8 hours, an oxidation reaction treatment was carried out in the same way as Example 1. The weight of fiber increased 23.9% to obtain 4.99g of PPSOfiber. This fiber showed, in differential scanning calorimeter (DSC) measurement, 3.10 J/g of heat of fusion around 285°C and it was an almost infusible fiber. In addition, it showed an excellent characteristics in chemical resistance, i.e., to all of the above-mentioned chemicals, it perfectly maintained its shape both in the chemical liquids and when taken out from the chemical liquids. Furthermore, as a result of thermogravimetric analysis (TGA) measurement, the amount of char residue was 7.6 wt% based on the PPSO fiber. With respect to wide angle X-ray diffraction and moisture absorbability, they were also evaluated in the same way as Example 1.

### Example 6

800 mL of acetic acid (product of Kanto Chemical Co.) and 46.16g of sodium perborate 4-hydrate (0.30mmol; product of Mitsubishi Gas Chemical Co.) were fed to a reactor and stirred at 60°C to be dissolved. Next, 4.03g of poly-p-phenylene sulfide (PPS) fiber ("Torcon" (trademark) of Toray Industries, Inc.; fiber length, about 20 m; single fiber thickness, 2.2 dtex) was immersed in this reaction solution, and subjected to an oxidation reaction treatment at 60°C for 4 hours. The fiber weight increased 18.4%, and 4.77g of fiber wasobtained. In this fiber, in measurement of differential scanning calorimeter (DSC), showed 17.01 J/g of heat of fusion around 285°C. Furthermore, similar to the first stage, 800mL of acetic acid (product of Kanto Chemical Co.) and 46.16g of sodium perborate 4-hydrate (0.30mmol; product of Mitsubishi Gas Chemical Co.) were fed to a reactor and the fiber obtained in the first stage was immersed in this reaction solution, and subjected to an oxidation reaction treatment at 60°C for 4 hours to carry out second stage oxidation reaction treatment of a multi-stage treatment. The fiber weight increased 24.3% based on the PPS fiber of the first stage, and 5.01g of poly-p-phenylene sulfoxidesulfone (PPSO) fiber was obtained. In this fiber, the peak of fusion around the melting point of PPS (285°C) disappeared, no peak of fusion was observed at any temperature measured, and it was an infusible fiber. In addition, it showed an excellent characteristics in chemical resistance, too, i.e., to all the above-mentioned chemicals of which chemical resistance to be evaluated, its shape was completely maintained both in the chemical liquids and when taken out from the chemical liquids. Furthermore, as a result of measurement of thermogravimetric analysis (TGA), the amount of char residue was 12.7 wt% based on the PPSO fiber. Furthermore, it showed a low moisture absorbability of 5.1%. And, a wide angle X-ray diffraction was also evaluated in the same way as Example 1.

### Comparative example 1

An oxidation reaction treatment was carried out in the same way as Example 1, except shortening the reaction time from 10 hours to 3 hours. The weight of fiber slightly increased 4.7%, and since it showed a heat of fusion of 22.01 J/g at around 285°C in differential scanning calorimeter (DSC) measurement, it was found that the oxidation reaction was not sufficiently carried out. In addition, with respect to the evaluation of chemical resistance, it dissolved in concentrated nitric acid, it maintained its shape in concentrated sulfuric acid but it deformed when picked up by tweezers, i.e., both of heat resistance and chemical resistance were inferior to those of PPSO fiber which is aimed in the present invention. Furthermore, with respect to thermogravimetric analysis (TGA), it almost quantitatively consumed by heat and no residual product was detected. Although crystallization degree was high as 50%, the aimed oxidation reaction was not sufficiently carried out, and it can be said that this crystallization degree represents that of the PPS fiber. Therefore, it showed a low moisture absorbability of PPS fiber of 1.2%.

### Comparative example 2

In the same measurement and evaluation conditions as Examples, the PPS fiber described in Example 1 ("Torcon" (trademark) of Toray Industries, Inc.) was subjected to DSC measurement and evaluation of chemical resistance. As a result, it showed a heat of fusion of 37.10 J/g at around 285°C, and with respect to the evaluation of chemical resistance, it dissolved in concentrated nitric acid, it could keep its shape in concentrated sulfuric acid but it deformed when picked up by tweezers, i.e., both of heat resistance and chemical resistance were inferior to those of PPSO fiber. Furthermore, with respect to thermogravimetric analysis (TGA), it almost quantitatively consumed by heat and no residual product was detected. It showed a low moisture absorbability of PPS fiber of 0.8%. The results of Examples 1 to 6 and Comparative examples 1 and 2 were shown in Table 1.

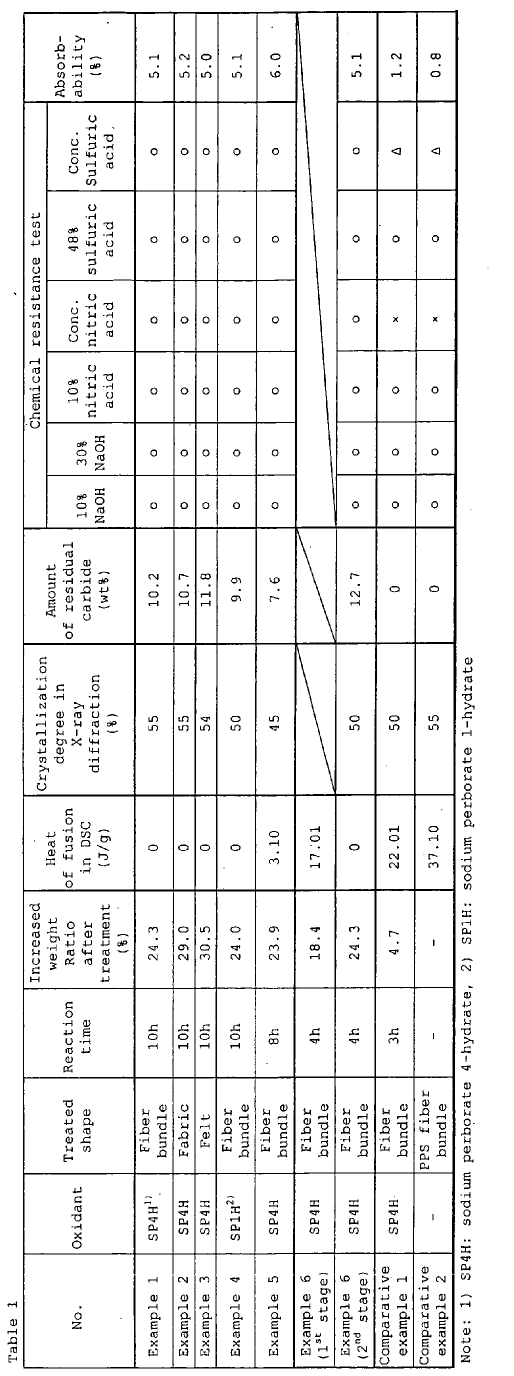

### Example 7

15.0g of acetic acid (0.15 mol; product of Wako Pure Chemical Industries) and 5.0g (0.05 mol; product of Kanto Chemical Co.) of 34.5% aqueous hydrogen peroxide solution were fed to a reactor and stirred at room temperature (about 20°C) until a uniform solution was obtained. Next, 69.3 mg of poly-p-phenylene sulfide (PPS) fiber ("Torcon" (trademark) of Toray Industries, Inc.; fiber length about 2m; single fiber thickness, 4.5 dtex) was immersed in this reaction solution, and subjected to an oxidation reaction treatment at 60°C. The reaction was completed after 6 hours and obtained 88.1 mg of a poly-p-phenylene sulfoxide (PPSO) fiber of which weight increased 27.2 wt%. In this fiber, in measurement of differential scanning calorimeter (DSC), the peak of fusion around the melting point of PPS (285°C) disappeared, no peak of fusion was observed at any temperature measured, and it was an infusible fiber. And, with respect to chemical resistance, to all the above-mentioned chemicals of which chemical resistance to be evaluated, its shape was completely maintained both in the chemical liquids and when taken out from the chemical liquids. Furthermore, as a result of measurement of thermogravimetric analysis (TGA), the amount of char residue was 13.2 wt% based on the PPSO fiber. Furthermore, the moisture absorbability was a low level of 5.2%. And, a wide angle X-ray diffraction was also measured in the same way as Example 1.

### Example 8

71.2 mg of poly-p-phenylene sulfide (PPS) fiber ("Torcon" (trademark) of Toray Industries, Inc.; fiber length about 2m; single fiber thickness, 4.5 dtex) was subjected to an oxidation reaction treatment at 60°C in the same way as Example 7, except changing the feeding amounts of the oxidant and the liquid to 10.0g of acetic acid (0.10 mol; product of Wako Pure Chemical Industries) and 10.0g of 34.5% aqueous hydrogen peroxide solution (0.10 mol; product of Kanto Chemical Co.). The reaction was completed after 7 hours and obtained 89.2 mg of a poly-p-phenylene sulfoxide (PPSO) fiber of which weight increased 25.2 wt%. In this fiber, in measurement of differential scanning calorimeter (DSC), the peak of fusion around the melting point of PPS (285°C) disappeared, no peak of fusion was observed at any temperature measured, and it was an infusible fiber. And, with respect to chemical resistance, it showed an excellent characteristics, i.e., to all the above-mentioned chemicals of which chemical resistance to be evaluated, its shape was completely maintained both in the chemical liquids and when taken out from the chemical liquids. Furthermore, as a result of measurement of thermogravimetric analysis (TGA), the amount of char residue was 13.2 wt% based on the PPSO fiber. Furthermore, the moisture absorbability was a low level of 5.1%. And, a wide angle X-ray diffraction was also measured in the same way as Example 1.

### Example 9

20.0g of peracetic acid solution (peracetic acid 23.67 mmol; product of Mitsubishi Gas Chemical Co.) of which peracetic acid concentration was adjusted to 8 wt% with acetic acid (product of Kanto Chemical Co.) was fed to a reactor and stirred at 60°C. Then, 70.6 mg of poly-p-phenylene sulfide (PPS) fiber ("Torcon" (trademark) of Toray Industries, Inc.; fiber length, about 2m; single fiber thickness, 2.2 dtex) was immersed into this reaction liquid and subjected to an oxidation reaction treatment at 60°C for 5 hours. The weight increased 2 9. 8% and 91. 6 mg of a poly-p-phenylene sulfoxide (PPSO) fiber was obtained. In this fiber, in measurement of differential scanning calorimeter (DSC), the peak of fusion around the melting point of PPS (285°C) disappeared, no peak of fusion was observed at any temperature measured, and it was an infusible fiber. And, with respect to chemical resistance, it showed an excellent characteristics, i.e., to all the above-mentioned chemicals of which chemical resistance to be evaluated, its shape was completely maintained both in the chemical liquids and when taken out from the chemical liquids. Furthermore, as a result of measurement of thermogravimetric analysis (TGA), the amount of char residue was 12.8 wt% based on the PPSO fiber. Furthermore, the moisture absorbability was a low level of 5.0%. And, a wide angle X-ray diffraction was also evaluated in the same way as Example 1.

### Example 10

An oxidation reaction treatment was carried out in the same way as Example 9, except changing the peracetic acid concentration to 3.6 wt%. The fiber weight increased 27.4% and a similar infusible PPSO fiber was obtained. Wide angle X-ray diffraction and the moisture absorbability were also evaluated in the same way as Example 1.

### Example 11

An oxidation reaction treatment was carried out in the same way as Example 9, except using an aqueous peracetic acid solution of which peracetic acid concentration was adjusted to 4.5 wt% with 50 wt% aqueous acetic acid solution. The fiber weight increased 25.7% and a similar infusible PPSO fiber was obtained. Wide angle X-ray diffraction was also evaluated in the same way as Example 1.

### Example 12

An oxidation reaction treatment was carried out in the same way as Example 9, except using 1.57g of a PPS felt ("Torcon" (trademark) of Toray Industries, Inc.; size, 8.9 x 3.2 cm; single fiber thickness, 3.0 dtex) instead of the PPS fiber. The felt weight increased 31.2% and 2. 06g of a PPSO felt was obtained. In this felt, in measurement of differential scanning calorimeter (DSC), the melting point of PPS disappeared, no peak of fusion was observed at any temperature measured, and it was an infusible felt. And, it was a felt with substantially no size change before and after the treatment and of which shape was completely maintained. Furthermore, the chemical resistance, the amount of char residue by TGA measurement, the moisture absorbability, etc., were also evaluated in the same way as Example 1.

### Example 13

An oxidation reaction treatment was carried out in the same way as Example 9 except using 1.54g of an PPS film ("Torcon" (trademark) of Toray Industries, Inc.; size 9.0 x 21. 0 cm) instead of the PPS fiber. The weight of the film increased 27.1% and 1. 96g of a PPSO film was obtained. In this film, in measurement of differential scanning calorimeter (DSC), the melting point of PPS film disappeared, no peak of fusion was observed at any temperature measured, and it was an infusible film. And, it was a film with substantially no size change before and after the treatment and of which shape was completely maintained. And, with respect to chemical resistance and the amount of char residue by TGAmeasurement, they were also evaluated in the same way as Example 1. Furthermore, as a result of measurement of wide angle X-ray diffraction, the peak areal ratio originated from crystalline structure to the total diffraction peak area of the PPSO film was 56%. Furthermore, it showed a low moisture absorbability of 4.5%. From comparison with Examples 7 to 12, although the moisture absorbability is low, it can be understood that it is a difference depending on the differences of surface areas of the fiber shape and the film shape, i.e., a difference of contacting areas with moisture.

### Example 14

An oxidation reaction treatment was carried out in the same way as Example 9 except using 5.95g of a PPS paper ("Torcon Paper" (trademark) of Toray Industries, Inc.; size 20.0 cm x 36.0 cm x 100 µm) instead of the PPS fiber. The weight the paper increased 22.4% and 7.28g of a PPSO paper was obtained. In this paper, in measurement of differential scanning calorimeter (DSC), the melting point of PPS paper disappeared, no peak of fusion was observed at any temperature measured, and it was an infusible paper. And, it was a paper with substantially no size change before and after the treatment and of which shape was completely maintained. And, with respect to chemical resistance and the amount of char residue by TGA measurement, they were also evaluated in the same way as Example 1. Furthermore, the moisture absorbability was a low level of 5.7%. Furthermore, as a result of measurement of electrical insulation, it had a volume resistivity of 1.3 x 10¹⁶ Ω·cm and a dielectric strength of 6.4 kV/mm.

Furthermore, it was found that said PPSO paper obtained by oxidizing the PPS paper exhibits an effect for paper use, especially as an electrical insulating paper. In addition, because it exhibits a characteristics of heat-moisture resistance, after said PPSO paper was subjected to an moisture absorption treatment, its electrical insulation was measured. As a result, the volume resistivity was 1.0 x 10¹⁶ Ω·cm and the dielectric strength was 5.4 kV/mm and it was found that the decrease of electrical characteristics due to moisture absorption was small and it exhibits practically useful electrical characteristics.

### Example 15

20.0g of peracetic acid solution (peracetic acid 23.67 mmol; product of Mitsubishi Gas Chemical Co.) adjusted to peracetic acid concentration to 8 wt% with acetic acid (product of Kanto Chemical Co.) was fed to a reactor, and stirred at 60°C. Next, 70.60 mg of poly-p-phenylene sulfide (PPS) fiber ("Torcon" (trademark) of Toray Industries, Inc.; fiber length, about 2 m; single fiber thickness, 4.5 dtex) was immersed in this reaction solution, and subjected to the first stage oxidation reaction treatment of a multi-stage treatment at 60°C for one hour. The fiber weight increased 13.0%, and 79. 76 mg of fiber of poly-p-phenylene sulfide oxide was obtained. In this fiber, in measurement of differential scanning calorimeter (DSC), showed 15. 90 J/g of heat of fusion around 285°C. Furthermore, similar to the first stage, 20.0g of peracetic acid solution (peracetic acid 23. 67 mmol; product of Mitsubishi Gas Chemical Co.) adjusted to peracetic acid concentration to 8 wt% with acetic acid (product of Kanto Chemical Co.) was fed to a reactor again, and the fiber of the poly-p-phenylene sulfide oxide obtained in the first stage was immersed in this reaction solution, and subjected to the second stage oxidation reaction treatment of the multi-stage treatment at 60°C for 1 hour. The fiber weight increased 29. 6% based on the initial PPS fiber, and 91.53 mg of poly-p-phenylene sulfoxide (PPSO) fiber was obtained. In this fiber, the peak of fusion around the melting point of PPS (285°C) disappeared, no peak of fusion was observed at any temperature measured, and it was an infusible fiber. In addition, it showed an excellent characteristics in chemical resistance, too, i.e., to all the above-mentioned chemicals of which chemical resistance to be evaluated, its shape was completely maintained both in the chemical liquids and when taken out from the chemical liquids. Furthermore, as a result of measurement of thermogravimetric analysis (TGA), the amount of char residue was 13.0 wt% based on the PPSO fiber. Furthermore, wide angle X-ray diffraction was also measured in the same way as Example 1.

### Comparative example 3

An oxidation reaction treatment was carried out in the same way as Example 9, using a peracetic acid/acetic acid aqueous solution adjusted to 1.8 wt% with 20 wt% aqueous acetic acid solution. The weight of fiber increased 12.4%. With respect to this fiber, since it showed a heat of fusion of 15. 70 J/g at around 285°C in differential scanning calorimeter (DSC) measurement, it was found that the oxidation reaction was not sufficiently carried out and had an unreacted PPS structure. In addition, with respect to the evaluation of chemical resistance, it dissolved in concentrated nitric acid, it maintained its shape in concentrated sulfuric acid but it deformed when picked up by tweezers, i.e., both of heat resistance and chemical resistance were inferior to those of PPSO fiber. With respect to wide angle X-ray diffraction, etc., it was evaluated in the same way as Example 1. Although crystallization degree was high as 50%, the aimed oxidation reaction was not sufficiently carried out, and it can be said that this crystallization degree represents that of the PPS fiber. Therefore, it showed a low moisture absorbability of PPS fiber of 1.0%.

The results of Examples 7 to 15 and Comparative example 3 are shown in Table 2.

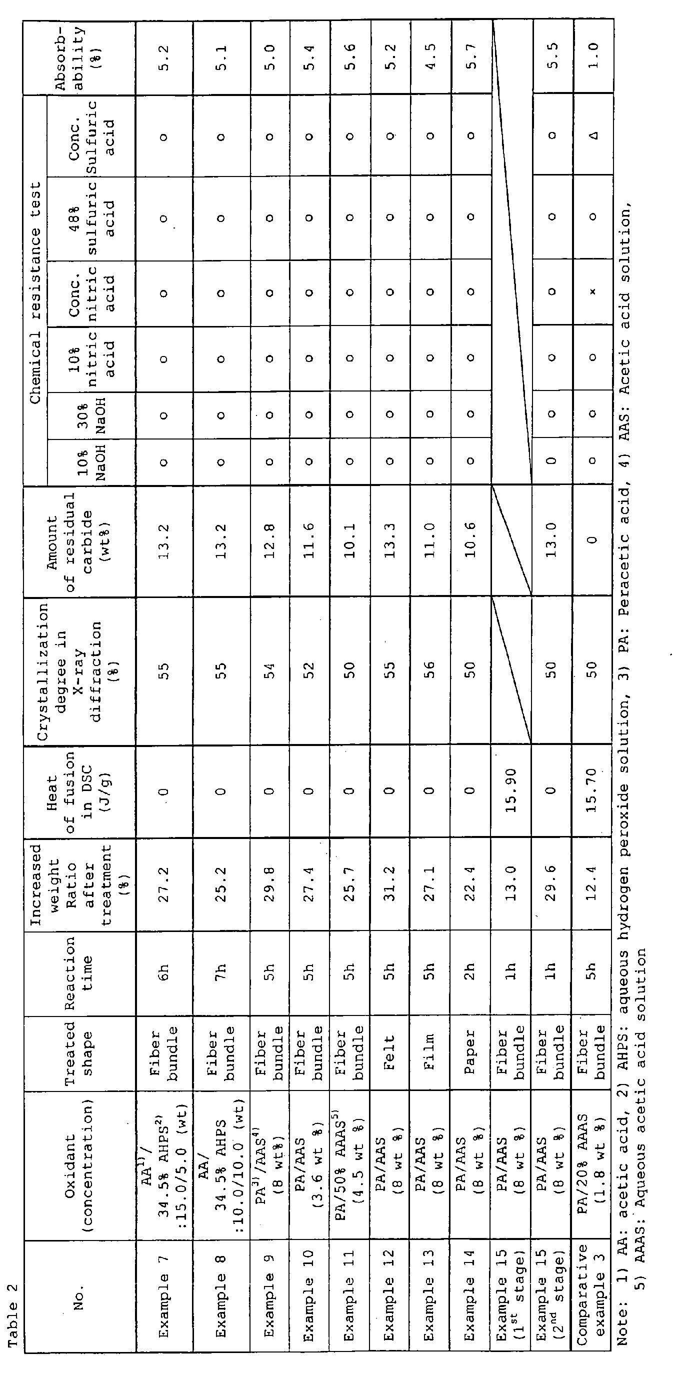

### Example 16

15.0g of acetic anhydride (0.15 mol; product of Wako Pure Chemical Industries) and 5.0g of 34.5% aqueous hydrogen peroxide solution (0.05 mol; product of Kanto Chemical Co.) were fed to a reactor and stirred at room temperature (at about 20°C) until a uniform solution was obtained. Next, 68.6 mg of poly-p-phenylene sulfide (PPS) fiber ("Torcon" (trademark) of Toray Industries, Inc.; fiber length, about 2m; single fiber thickness, 4.5 dtex) was immersed in this reaction solution, and subjected to an oxidation reaction treatment at 60°C. The reaction was completed in 2 hours and obtained 85.4 mg of a poly-p-phenylene sulfoxide (PPSO) fiber of which weight increased 24.4 wt%. With respect to this fiber; in measurement of differential scanning calorimeter (DSC), the peak of fusion around the melting point of PPS (285°C) disappeared, no peak of fusion was observed at any temperature measured, and it was an infusible fiber. And, with respect to chemical resistance, to all the above-mentioned chemicals of which chemical resistance to be evaluated, its shape was completely maintained both in the chemical liquids and when taken out from the chemical liquids. Furthermore, as a result of measurement of thermogravimetric analysis (TGA), the amount of char residue was 13.2 wt% based on the PPSO fiber. Furthermore, wide angle X-ray diffraction was also measured in the same way as Example 1.

### Example 17

An oxidation reaction treatment was carried out in the same way as Example 16, except changing the weight of acetic anhydride to 10.0g (0.10 mol; product of Wako Pure Chemical Industries) and the weight of 34.5% aqueous hydrogen peroxide solution to 10.0g (0.10mol; product of KantoChemical Co.). The reaction was completed in 3 hours to obtain a similar infusible PPSO fiber of which weight increased 26.0%, and it was evaluated in the same way as Example 1.

### Example 18

An oxidation reaction treatment was carried out in the same way as Example 16, except changing the weight of acetic anhydride to 17.5g (0.17 mol; product of Wako Pure Chemical Industries) and the weight of 34.5% aqueous hydrogen peroxide solution to 2. 5g (0. 025 mol; product of Kanto Chemical Co.). The reaction was completed in 5 hours to obtain a similar infusible PPSO fiber of which weight increased 26.6%, and it was evaluated in the same way as Example 1.

### Example 19

Instead of PPS fiber, using 65.1 mg of PPS fabric ("Torcon" (tradename) of Toray Industries, Inc.; size, 1.0 cm x 1. 0 cm; single fiber thickness, 4.5 dtex), an oxidation reaction treatment was carried out in the same way as Example 16. The reaction was completed in 2 hours to obtain 83. 6 mg of PPSO fabric of which weight increased 28.4%. With respect to this fabric, in DSC measurement, the melting point of PPS disappeared, no peak of fusion was observed at any temperature measured, and it was an infusible fabric. In addition, it was an article of which shape was perfectly maintained with no substantial change of size before and after the treatment. Furthermore, with respect to the chemical resistance, the amount of char residue by TGA measurement, the moisture absorbability, etc., they were evaluated in the same way as Example 1.

This PPSO fabric obtained by oxidation of the PPS fabric exhibited an effect as filters, especially as a bag filter by making advantage of the infusibility, or an excellent effect as a heat resistant working wear, especially as a firewear.

### Example 20

Instead of PPS fiber, using 65.3 mg of PPS felt ("Torcon" (tradename) of Toray Industries, Inc. ; size, 0. 5 cm X 1. 0 cm; single fiber thickness, 4.5 dtex), an oxidation reaction treatment was carried out in the same way as Example 16. The reaction was completed in 2 hours to obtain 84.9g of PPSO felt of which weight increased 30.1%. With respect to this felt, in DSC measurement, the melting point of PPS disappeared, no peak of fusion was observed at any temperature measured, and it was an infusible felt. In addition, it was an article of which shape was perfectly maintained with no substantial change of size before and after the treatment. Furthermore, with respect to the chemical resistance, the amount of char residue by TGA measurement, the moisture absorbability, etc., they were evaluated in the same way as Example 1. This PPSO felt obtained by oxidation of the PPS felt exhibited an effect as filters, especially as a bag filter by making advantage of the infusibility or an excellent effect as a heat resistant working wear, especially as a firewear.

### Example 21

An oxidation reaction treatment was carried out in the same way as Example 16 except using 5.95g of a PPS paper ("Torcon Paper" (trademark) of Toray Industries, Inc.; size 20.0 cm x 36.0 cm x 100µm) instead of the PPS fiber. The reaction was completed in 2 hours, the weight the paper increased 23.4% and 7.34g of a PPSO paper was obtained. With respect to this paper, in measurement of differential scanning calorimeter (DSC), the melting point of PPS fiber disappeared, no peak of fusion was observed at any temperature measured, and it was an infusible paper. In addition, it was a paper of which shape was perfectly maintained with no substantial change of size before and after the treatment. And, the chemical resistance was in the same level as Example 16 and the moisture absorbability was 5.4%. With respect to wide angle X-ray diffraction, it was evaluated in the same way as Example 1. Furthermore, as a result of measurement of electrical insulation, it had a volume resistivity of 1.2x.10¹⁶ Ω·cm and a dielectric strength of 6. 0 kV/mm. Furthermore, after said PPSOpaper was subj ected to a moisture absorption treatment, its electrical insulation was measured. As a result, the volume resistivity was 1.0 x 10¹⁶ Ω·cm and the dielectric strength was 5.5 kV/mmanditwas found that the decrease of electrical characteristics due to the moisture absorption was small, to exhibit practically useful electric characteristics.

In addition, said PPSO paper obtained by oxidizing the PPS paper exhibits an excellent effect for paper use, especially for an electrical insulating paper of motor.

### Example 22

An oxidation reaction treatment was carried out in the same way as Example 16, except changing the acetic anhydride to 15.0g of propionic anhydride (0.12 mol; product of Tokyo Chemical Industry Co.). The reaction was completed in 10 hours, the weight increased 26.0% to obtain a similar infusible PPSO fiber and it was evaluated in the same way as Example 1.
The results of Examples 16 to 22 and, for reference, the result of the above-mentioned Comparative example 2 are shown in Table 3.

**Table 3**

| No | Oxidation liquid | Treated shape | Reaction time | Increased weight ratio after treatment (%) | Heat of fusion in DSC (J/g) | Crystalization degree in X-ray Diffraction (%) | Amount of residual carbide (wt%) | Chemical resistance test | | | | | | Absorb -Ability (%) |
|---|---|---|---|---|---|---|---|---|---|---|---|---|---|---|
| | | | | | | | | 10% NaOH | 30% NaOH | 10% nitric acid | Conc. nitric acid | 48% sulfuric acid | Conc. Sulfuric acid | |
| Example 16 | AAA¹⁾ / 34.5% AHPS²⁾: 15.0/5.0 (wt) | Fiber bundle | 2h | 24.4 | 0 | 56 | 13.2 | o | o | o | o | o | o | 5.2 |
| Example 17 | AAA / 34.5% AHPS: 10.0/10.0 (wt) | Fiber bundle | 3h | 26. 0 | 0 | 55 | 13.2 | o | o | o | o | o | o | 5.3 |
| Example 18 | AAA / 34.5% AHPS: 17.5/2.5 (wt) | Fiber bundle | 5h | 26.6 | 0 | 55 | 12.8 | o | o | o | o | o | o | 5.6 |
| Example 19 | AAA / 34.5% AHPS: 15.0/5.0 (wt) | Fabric | 2h | 28.4 | 0 | 52 | 11.6 | o | o | o | o | o | o | 5.6 |
| Example 20 | AAA / 34.5% AHPS: 15.0/5.0 (wt) | Felt | 2h | 30.1 | 0 | 45 | 10.1 | o | o | o | o | o | o | 5.7 |
| Example 21 | AAA / 34.5% AHPS: 15.0/5.0 (wt) | Paper | 2h | 23.4 | 0 | 51 | 11.2 | o | o | o | o | o | o | 5.4 |
| Example 22 | PAA³⁾ / 34.5% AHPS: 15.0/5.0 (wt) | Fiber bundle | 10h | 26.0 | 0 | 55 | 13.3 | o | o | o | o | o | o | 5.2 |
| Comp. Example 2 | - | PPS Fiber bundle | - | - | 37.10 | 55 | 0 | o | o | o | × | o | Δ | 3.0 |

| | | | | | | | | | | | | | | |
|---|---|---|---|---|---|---|---|---|---|---|---|---|---|---|
| Note: 1) AAA: acetic anhydride, 2) AHPS: aqueous hydrogen peroxide solution, 3) PAA: Propionic anhydride | | | | | | | | | | | | | | |

### Example 23

111g of acetic acid (1.85 mol; product of Kanto Chemical Co.) and 37.0g of 34.5% aqueous hydrogen peroxide solution (0.38 mol; product of Kanto Chemical Co.) were fed to a reactor and stirred at room temperature (about 20°C). Next, 19.8g of PPS staple fiber ("Torcon" (trademark) of Toray Industries, Inc.; single fiber thickness, 2.2 dtex) was immersed in the reaction solution, heated to 60°C, successively, 10.0 g of sulfuric acid (0.1 mol; product of Kanto Chemical Co.) was slowly dropped in 30 minutes to carry out an oxidation reaction treatment. The reaction was completed in 2 hours after completing the dropping to obtain 25.8g of poly-p-phenylene sulfoxide (PPSO) staple fiber of which weight increased 30.3%. With respect to this staple fiber, in measurement of differential scanning calorimeter (DSC), themeltingpoint (285°C) of PPS fiber disappeared, no peak of fusion was observed at any temperature measured, and it was an infusible fiber. In addition, it showed an excellent characteristics in chemical resistance, i.e., to all the above-mentioned chemicals of which chemical resistance to be evaluated, its shape was completely maintained both in the chemical liquids and when taken out from the chemical liquids. Furthermore, as a result of thermogravimetric analysis (TGA) measurement, the amount of char residue was 13.3 wt% based on the PPSO fiber. And, the moisture absorbability showed a low level of 5.2%. With respect to wide angle X-ray diffraction, it was also evaluated in the same way as Example 1.

### Example 24

Instead of PPS staple fiber, by using 20.1g of PPS felt ("Torcon" (tradename) of Toray Industries, Inc.; size, 15 cm X 20 cm; single fiber thickness, 3.0 dtex), an oxidation reaction treatment was carried out in the same way as Example 23. The reaction was completed in 2 hours to obtain 25.9g of PPSO felt of which weight increased 28.9%. With respect to this felt, in DSC measurement, the melting point of PPS disappeared, no peak of fusion was observed at any temperature measured, and it was an infusible felt. In addition, it was a felt of which shape was perfectly maintained with no substantial change of size before and after the treatment. Furthermore, with respect to the chemical resistance, the amount of char residue by TGA measurement, the moisture absorbability, etc., they were also evaluated in the same way as Example 1.

### Example 25

Instead of PPS fiber, by using 4.73g of PPS fabric ("Torcon" (tradename) of Toray Industries, Inc.; size, 12. 5 cm x 5.0 cm; single fiber thickness, 3.0 dtex), an oxidation reaction treatment was carried out in the same way as Example 23. The reaction was completed in 2 hours to obtain 5.84g of PPSO fabric of which weight increased 23.5%. With respect to this fabric, in DSC measurement, the melting point of PPS fiber disappeared, no peak of fusion was observed at any temperature measured, and it was an infusible fabric. In addition, it was a fabric of which shape was perfectly maintained with no substantial change of size before and after the treatment. Furthermore, with respect to the chemical resistance, the amount of char residue by TGA measurement, the moisture absorbability, etc., they were also evaluated in the same way as Example 1.

### Example 26

Instead of the PPS fiber, by using 4.49g of a PPS paper ("Torcon Paper" (trademark) of Toray Industries, Inc.; size 20.0 cm x 34.0 cm x 100µm), an oxidation reaction treatment was carried out in the same way as Example 23. The reaction was completed in 2 hours, the weight the paper increased 22.5% and 5 . 50g of a PPSO paper was obtained. With respect to this paper, in measurement of differential scanning calorimeter (DSC), the melting point of PPS paper disappeared, no peak of fusion was observed at any temperature measured, and it was an infusible paper. In addition, it was a paper of which shape was perfectly maintained with no substantial change of size before and after the treatment. And, with respect to the chemical resistance, the amount of char residue by TGA measurement, the moisture absorbability, etc., they were also evaluated in the same way as Example 1. The moisture absorbability was 5.3%. Furthermore, as a result of measurement of electrical insulation, it had a volume resistivity of 3. 5 x 10¹⁴ Ω·cm and a dielectric strength of 6.0 kV/mm. After said PPSO paper was subjected to an moisture absorption treatment, its electrical insulation was measured, and as a result, the volume resistivity was 2.0 x 10¹⁴ Ω·cm and the dielectric strength was 5.3 kV/mm and it was found that the decrease of electrical characteristics due to the moisture absorption was small.

### Example 27

By changing the amounts of the oxidant and the liquid to be fed to 120g of acetic acid (2. 0 mol; product of Kanto Chemical Co.), 18.0g of 34.5% aqueous hydrogen peroxide solution (0.18 mol; product of Kanto Chemical Co.) and 20.0g of 95% sulfuric acid (0.2 mol; product of Kanto Chemical Co.), respectively, and by using 20.1g of PPS staple fiber ("Torcon" (trademark) of Toray Industries, Inc.), an oxidation reaction treatment was carried out in the same way as Example 23. The reaction was completed in 3 hours to obtain 26.1g of PPSO staple fiber of which weight increased 30.0%. With respect to this staple fiber, in measurement of differential scanning calorimeter (DSC), the melting point of PPS fiber disappeared, no peak of fusion was observed at any temperature measured, and it was an infusible fiber. In addition, it was a staple fiber of which shape was perfectly maintained with no substantial change of size before and after the treatment. And, with respect to the chemical resistance, the amount of char residue by TGA measurement, the moisture absorbability, etc., they were evaluated in the same way as Example 1.
The results of Example 23 to 27 are shown in Table 4.

**Table 4**

| No | Oxidation liquid | Treated shape | Reaction time | Increased weight ratio after treatment (%) | Heat of fusion in DSC (J/g) | Crystallization degree in X-ray Diffraction (%) | Amount of residual carbide (wt%) | Chemical resistance test | | | | | | Absorb- ability (%) |
|---|---|---|---|---|---|---|---|---|---|---|---|---|---|---|
| | | | | | | | | 10% NaOH | 30% NaOH | 10% nitric acid | Conc. nitric acid | 48% sulfuric acid | Conc. Sulfuric acid | |
| Example 23 | AA¹⁾/ 34.5% AHPS ²⁾/ 95% SA³⁾: 3/1/0.3 (wt) | Fiber bundle | 2h | 30.3 | 0 | 56 | 13.3 | o | o | o | o | o | o | 5.2 |
| Example 24 | AA /34.5% AHPS/ 95% SA: 3/1/0.3 (wt) | Felt | 2h | 28.9 | 0 | 56 | 13.2 | o | o | o | o | o | o | 5.2 |
| Example 25 | AA /34·5% AHPS/ 95% SA: 3/1/0.3 (wt) | Fabric | 2h | 23.5 | 0 | 55 | 12.8 | o | o | o | o | o | o | 5.3 |
| Example 26 | AA/34.5% AHPS/ 95% SA: 3/1/0.3 (wt) | Paper | 2h | 22.5 | 0 | 51 | 10.6 | o | o | o | o | o | o | 5.3 |
| 27 | Example AA /34.5% AHPS/ 95% SA: 7/1/1.1 (wt) | Fiber bundle | 3h | 30.0 | 0 | 55 | 13.1 | o | o | o | o | o | o | 5.3 |

| | | | | | | | | | | | | | | |
|---|---|---|---|---|---|---|---|---|---|---|---|---|---|---|
| Note: 1) AA: acetic acid, 2) AHPS: aqueous hydrogen peroxide solution, 3) SA: sulfuric acid | | | | | | | | | | | | | | |

### <Preparation of poly-p-phenylene sulfide resin>

### Reference example 1

8267.0g of 47.5% sodium hydrosulfide (70.0 mol), 2975.0g of 96% sodium hydroxide (71.4 mol), 11434. 5g of N-methyl-2-pyrrolidone (NMP) (115.5 mol), 516.6g of sodium acetate (6.3 mol), and 10500.0g of ion exchanged water were fed to 70 liter autoclave equipped with a stirrer, gradually heated to 230°C in 3 hours while passing nitrogen under normal pressure, and after distilling off 14770.0g of water and 280.0g of NMP, the reactor was cooled to 160°C. The residual water in the reaction system to one mol of fed alkali metal sulfide was 1.08 mol including those consumed by hydrolysis of the NMP. And, an amount of diffused hydrogen sulfide to one mol of fed alkali metal sulfide was 0.017 mol.

Next, 10347.6g of p-dichlorobenzene (p-DCB) (70.4 mol), 9064.4g of NMP (91.6 mol) were added, the reactor was sealed with nitrogen gas, the reaction mixture was heated from 200°C to 270°C at a rate of 0.6°C/min while stirring at 240 rpm, and maintained at 270°C for 140 minutes.

After leaving for 140 minutes at 270°C, it was cooled to 250°C while 2646.0g (147.0mol) of ion exchanged water was injected by pressure to the reaction system in 15 minutes. Then, cooled to 200°C at a rate of 1.0°C/min, and after that, rapidly cooled to around room temperature.

The content in the reactor was taken out and, after diluting with 35 liters of NMP, the solvent and the solid were separated by a sieve (80 mesh), the obtained particles were washed several times with 70 liters of warm water and filtered. This particle was hot air dried at 80°C, vacuum dried at 120°C to obtain a polyphenylene sulfide. The weight average molecular weight (Mw) of the polyphenylene sulfide at this time was, as a result of GPCmeasurement, Mw = 40,000.

### Reference example 2

As a result of carrying out a test in the same way as Reference example 1, except changing the amount of sodium acetate to 229.6g (2.8 mol), a polyphenylene sulfide of an a weight average molecular weight of Mw = 30,000 was obtained.

### <Preparation of poly-p-phenylene sulfide resin composition (preparation of pellets for film production)>

### Reference example 3

A slurry in which a calcite type spherical calcium carbonate of an average particle diameter of 1.0 µm is micro-dispersed in ethylene glycol at an amount of 50 wt% was prepared. After filtering this slurry by a filter of 1 µm cut, it was mixed with the poly-p-phenylene sulfide powder prepared in Reference example 1 or 2 by a Henschel mixer so that an amount of the calcium carbonate would be 5.0 wt%. Then, it was fed to a twin screw extruder equipped with 2 vents, the ethylene glycol was removed from the vents simultaneously with melt-kneading, and the PPS was extruded in a gut state and pelletized by cutting after cooling in water.

Furthermore, the poly-p-phenylene sulfide powder prepared by Reference example 1 or 2 alone was melt-extruded in the same way as the above-mentioned to make a pellet with no particle.

### <Preparation of poly-p-phenylene sulfide film>

### Reference example 4

The pellet with particle and the pellet with no particle prepared in Reference example 3 were mixed so that an amount of calcium carbonate would be 0.4 wt%. The pellet with particle and the pellet with no particle were combined with each other having the same weight average molecular weight. It was made into a crystalline pellet by treating 3 hours under vacuum of 3 mmHg (400 Pa) at 150°C in a rotary vacuum drier. Next, this crystalline pellet was fed to a single screw extruder of 90 mm diameter, passed through a filter of filtering accuracy 10 µm at 330°C, extruded from a stainless steel T-die of lip width 400 mm, slit clearance 1.5 mm and solidified by cooling by a metal drum of which surface was kept at 30°C to obtain an amorphous film of 650 µm thickness. Next, this amorphous film was heated by rolling onto a group of rolling rolls of surface temperature of 95°C, and was drawn 3.5 times in longitudinal direction (MD) between said rolls and successively placed roll of which surface temperature was 25°C. Next, it was drawn 3.5 times in the direction perpendicular to the longitudinal direction (TD) in a room of tenter in which 100°C hot air was circulated, and successively, after annealed in fixed length for 10 seconds in a room in which 280°C hot air was circulated, it was subjected to a limited contraction of 3.0% in transverse direction at a temperature of 200°C to thereby obtain a poly-p-phenylene sulfide film of 50 µm thickness.

Crystallization degree by wide angle X-ray diffraction of said films were 68% in both cases, and weight average molecular weights were not changed from those of poly-p-phenylene sulfide powders prepared by Reference example 1 or 2.

### Reference example 5

The pellet with no particle prepared in Reference example 3 was used alone, and it was fed to a single screw extruder of 90 mm diameter in the same way as Reference example 4, passed through a filter of filtering accuracy 10 µm at 330°C, extruded from a stainless steel T-die of lip width 400 mm, slit clearance 1.5 mm and solidified by cooling by a metal drum of which surface was kept at 30°C to obtain an amorphous film of 650 µm thickness. Next, this amorphous film was heated by rolling onto a group of rolling rolls of which surface temperature was 95°C, and was drawn 3.5 times in longitudinal direction (MD) between said rolls and successively placed roll of which surface temperature was 25°C. Next, it was drawn 3.5 times in the direction perpendicular to the longitudinal direction (TD) in a room in tenter in which 100°C hot air was circulated, and successively, after a fixed length annealing of 10 seconds in a room in which 280°C hot air was circulated, it was subjected to a limited contraction of 3.0% in transverse direction at a temperature of 200°C to thereby obtain a poly-p-phenylene sulfide film of 50 µm thickness.

Crystallization degree by wide angle X-ray diffraction of said films were 65% in both cases, and weight average molecular weights were not changed from those of poly-p-phenylene sulfide powders prepared by Reference example 1 or 2.

### <Preparation of poly-p-phenylene sulfide fiber>

### Reference example 6

Using the pellets with no particle prepared in Reference example 3, it was extruded from a spinneret at 320°C, an out put of 350g/min, and a taking up speed of 800 m/min, passed and cooled in a circumstance kept at 23°C to thereby obtain an undrawn yarn of 4375 dtex. Next, this undrawn yarn was rolled onto a group of rolling rolls of surface temperature of 98°C and drawn at a draw ratio of 3.27 and a drawing speed of 120 m/min. It was imparted a crimp of degree of crimp of 13.0 by a successively placed crimper of surface temperature of 90°C. Furthermore, after heat treated by passing through a circumstance kept at 125°C, it was cooled, and further, cut to thereby obtain a poly-p-phenylene sulfide fiber of a single fiber thickness of 2.2 dtex and a length of 50 mm to 80 mm.

Crystallization degree by wide angle X-ray diffraction of said fibers were 55% in both cases, and weight average molecular weights were not changed from those of poly-p-phenylene sulfide powders prepared by Reference example 1 or 2.

### Example 28

By using 4. 03g of poly-p-phenylene sulfide (PPS) fiber of weight average molecular weight, Mw = 40,000 and crystallization degree of 55% prepared by Reference example 6, an oxidation reaction treatment was carried out in the same way as Example 1. The fiber weight increased 24.3%, and 5.01g of poly-p-phenylene sulfone (PPSO) fiber was obtained. With respect to this fiber, in measurement of differential scanning calorimeter (DSC), the peak of fusion around the melting point of PPS (285°C) disappeared, no peak of fusion was observed at any temperature measured, and it was an infusible fiber. In addition, it showed an excellent characteristics in chemical resistance, too, i.e., to all the above-mentioned chemicals of which chemical resistance to be evaluated, its shape was completely maintained both in the chemical liquids and when taken out from the chemical liquids. Furthermore, as a result of measurement of thermogravimetric analysis (TGA), the amount of char residue was 10.2 wt% based on the PPSO fiber and the crystallization degree by wide angle X-ray diffraction was 45%.

### Example 29

By using 69.3 mg of poly-p-phenylene sulfide (PPS) fiber of weight average molecular weight, Mw = 40,000 and crystallization degree of 55% prepared by Reference example 6, an oxidation reaction treatment was carried out in the same way as Example 7. The fiber weight increased 27.2%, and 88.1 mg of poly-p-phenylene sulfone (PPSO) fiberwasobtained. Withrespecttothisfiber, in measurement of differential scanning calorimeter (DSC), the peak of fusion around the melting point of PPS (285°C) disappeared, no peak of fusion was observed at any temperature measured, and it was an infusible fiber. In addition, it showed an excellent characteristics in chemical resistance, too, i.e., to all the above-mentioned chemicals of which chemical resistance to be evaluated, its shape was completely maintained both in the chemical liquids and when taken out from the chemical liquids. Furthermore, as a result of measurement of thermogravimetric analysis (TGA), the amount of char residue was 13.2 wt% based on the PPSO fiber and the crystallization degree by wide angle X-ray diffraction was 45%.

### Example 30

By changing the fiber to the poly-p-phenylene sulfide (PPS) fiber of weight average molecular weight, Mw = 30,000 and crystallization degree of 55%, an oxidation reaction treatment was carried out in the same way as Example 29. The fiber weight increased 28.2%, and 88.8 mg of poly-p-phenylene sulfone (PPSO) fiber was obtained. With respect to this fiber, in measurement of differential scanning calorimeter (DSC), the peak of fusion around the melting point of PPS (285°C) disappeared, no peak of fusion was observed at any temperature measured, and it was an infusible fiber. In addition, it showed an excellent characteristics in chemical resistance, too, i.e., to all the above-mentioned chemicals of which chemical resistance to be evaluated, its shape was completely maintained both in the chemical liquids and when taken out from the chemical liquids. Furthermore, as a result of measurement of thermogravimetric analysis (TGA), the amount of char residue was 12.8 wt% based on the PPSO fiber and the crystallization degree by wide angle X-ray diffraction was 43%. Furthermore, it showed a low moisture absorbability of 5.2%.

### Example 31

By using 68.6 mg of poly-p-phenylene sulfide (PPS) fiber of weight average molecular weight, Mw = 40,000, and crystallization degree of 55% prepared by Reference example 6, an oxidation reaction treatment was carried out in the same way as Example 16. The fiber weight increased 24.4%, and 85.4 mg of poly-p-phenylene sulfone (PPSO) fiberwas obtained. With respect to this fiber, inmeasurement of differential scanning calorimeter (DSC), the peak of fusion around the melting point of PPS (285°C) disappeared, no peak of fusion was observed at any temperature measured, and it was an infusible fiber. In addition, it showed an excellent characteristics in chemical resistance, too, i.e., to all the above-mentioned chemicals of which chemical resistance to be evaluated, its shape was completely maintained both in the chemical liquids and when taken out from the chemical liquids. Furthermore, as a result of measurement of thermogravimetric analysis (TGA), the amount of char residue was 14.3 wt% based on the PPSO fiber and the crystallization degree by wide angle X-ray diffraction was 44%, and, it showed a low moisture absorbability of 5.0%.

### Example 32

By changing the fiber to the poly-p-phenylene sulfide (PPS) fiber of weight average molecular weight Mw = 30,000 and crystallization degree of 55%, an oxidation reaction treatment was carried out in the same way as Example 31. The fiber weight increased 25.7%, and 86.2 mg of poly-p-phenylene sulfone (PPSO) fiber was obtained. With respecttothisfiber,in measurement of differential scanning calorimeter (DSC), the peak of fusion around the melting point of PPS (285°C) disappeared, no peak of fusion was observed at any temperature measured, and it was an infusible fiber. In addition, it showed an excellent characteristics in chemical resistance, too, i.e., to all the above-mentioned chemicals of which chemical resistance to be evaluated, its shape was completely maintained both in the chemical liquids and when taken out from the chemical liquids. Furthermore, as a result of measurement of thermogravimetric analysis (TGA), the amount of char residue was 12.7 wt% based on the PPSO fiber and the crystallization degree by wide angle X-ray diffraction was 42%. Furthermore, it showed a low moisture absorbability of 5.3%.

### Example 33

By using 19. 8g of poly-p-phenylene sulfide (PPS) fiber of weight average molecular weight, Mw = 40,000 and crystallization degree of 55% prepared by Reference example 6, an oxidation reaction treatment was carried out in the same way as Example 23. The fiber weight increased 30. 3%, and 25. 8g of poly-p-phenylene sulfone (PPSO) fiber was obtained. With respect to this fiber, in measurement of differential scanning calorimeter (DSC), the peak of fusion around the melting point of PPS (285°C) disappeared, no peak of fusion was observed at any temperature measured, and it was an infusible fiber. In addition, it showed an excellent characteristics in chemical resistance, too, i.e. , to all the above-mentioned chemicals of which chemical resistance to be evaluated, its shape was completely maintained both in the chemical liquids and when taken out from the chemical liquids. Furthermore, as a result of measurement of thermogravimetric analysis (TGA), the amount of char residue was 13.3 wt% based on the PPSO fiber and the crystallization degree by wide angle X-ray diffraction was 44%, and, its moisture absorbability was 5.2%.

### Example 34

By changing the fiber to the poly-p-phenylene sulfide (PPS) fiber of weight average molecular weight, Mw = 30,000 and crystallization degree of 55%, an oxidation reaction treatment was carried out in the same way as Example 33. The fiber weight increased 29.2%, and 25.6 g of poly-p-phenylene sulfone (PPSO) fiber was obtained. With respect to this fiber, inmeasurement of differential scanning calorimeter (DSC), the peak of fusion around the melting point of PPS (285°C) disappeared, no peak of fusion was observed at any temperature measured, and it was an infusible fiber. In addition, it showed an excellent characteristics in chemical resistance, too, i.e., to all the above-mentioned chemicals of which chemical resistance to be evaluated, its shape was completely maintained both in the chemical liquids and when taken out from the chemical liquids. Furthermore, as a result of measurement of thermogravimetric analysis (TGA), the amount of char residue was 12.6 wt% based on the PPSO fiber and the crystallization degree by wide angle X-ray diffraction was 43%, and its moisture absorbability was 5.3%.

### Example 35

By using 20.0g of poly-p-phenylene sulfide (PPS) film of weight average molecular weight, Mw = 40,000 and crystallization degree of 68% prepared by Reference example 4, an oxidation reaction treatment was carried out in the same way as the fiber treatment condition of Example 23. The reaction completed in 8 hours, and the fiber weight increased 30.3%, and 26.1g of poly-p-phenylene sulfone (PPSO) film was obtained. With respect to this film, in measurement of differential scanning calorimeter (DSC), the peak of fusion around the melting point of PPS (285°C) disappeared, no peak of fusion was observed at any temperature measured, and it was an infusible film. In addition, it showed an excellent characteristics in chemical resistance, too, i.e., to all the above-mentioned chemicals of which chemical resistance to be evaluated, its shape was completely maintained both in the chemical liquids and when taken out from the chemical liquids. Furthermore, as a result of measurement of thermogravimetric analysis (TGA), the amount of char residue was 13.2 wt% based on the PPSO film and the crystallization degree by wide angle X-ray diffraction was 56%, and, it showed a low moisture absorbability of 4.7%.

### Example 36

By changing the film to the poly-p-phenylene sulfide (PPS) film of weight average molecular weight, Mw = 30, 000 and crystallization degree of 68%, an oxidation reaction treatment was carried out in the same way as Example 35. The film weight increased 29.2%, and 25.8g of poly-p-phenylene sulfone (PPSO) film was obtained. With respect to this film, in measurement of differential scanning calorimeter (DSC), the peak of fusion around the melting point of PPS (285°C) disappeared, no peak of fusion was observed at any temperature measured, and it was an infusible film. In addition, it showed an excellent characteristics in chemical resistance, too, i.e., to all the above-mentioned chemicals of which chemical resistance to be evaluated, its shape was completely maintained both in the chemical liquids and when taken out from the chemical liquids. Furthermore, as a result of measurement of thermogravimetric analysis (TGA), the amount of char residue was 12.9 wt% based on the PPSO film and the crystallization degree by wide angle X-ray diffraction was 54%, and its moisture absorbability was 4.6%.

### Example 37

By changing the film to the poly-p-phenylene sulfide (PPS) film of weight average molecular weight, Mw = 40,000 and crystallization degree of 65% prepared by Reference example 5, an oxidation reaction treatment was carried out in the same way as Example 35. The film weight increased 29.5%, and 25. 9g of poly-p-phenylene sulfone (PPSO) film was obtained. With respect to this film, in measurement of differential scanning calorimeter (DSC), the peak of fusion around the melting point of PPS (285°C) disappeared, no peak of fusion was observed at any temperature measured, and it was an infusible film. In addition, it showed an excellent characteristics in chemical resistance, too, i.e., to all the above-mentioned chemicals of which chemical resistance to be evaluated, its shape was completely maintained both in the chemical liquids and when taken out from the chemical liquids. Furthermore, as a result of measurement of thermogravimetric analysis (TGA), the amount of char residue was 13.1 wt% based on the PPSO fiber and the crystallization degree by wide angle X-ray diffraction was 55%, and its moisture absorbability was 4.3%.

### Example 38

By changing the film to the poly-p-phenylene sulfide (PPS) film of weight average molecular weight, Mw = 30, 000 and crystallization degree of 65% prepared by Reference example 5, an oxidation reaction treatment was carried out in the same way as Example 35. The film weight increased 28.3%, and 25.7g of poly-p-phenylene sulfone (PPSO) film was obtained. With respect to this film, in measurement of differential scanning calorimeter (DSC), the peak of fusion around the melting point of PPS (285°C) disappeared, no peak of fusion was observed at any temperature measured, and it was an infusible film. In addition, it showed an excellent characteristics in chemical resistance, too, i.e., to all the above-mentioned chemicals of which chemical resistance to be evaluated, its shape was completely maintained both in the chemical liquids and when taken out from the chemical liquids. Furthermore, as a result of measurement of thermogravimetric analysis (TGA), the amount of char residue was 12.8 wt% based on the PPSO film and the crystallization degree by wide angle X-ray diffraction was 53%, and its moisture absorbability was 4.5%.

The results of Examples 28 to 38 are shown in Table 5.

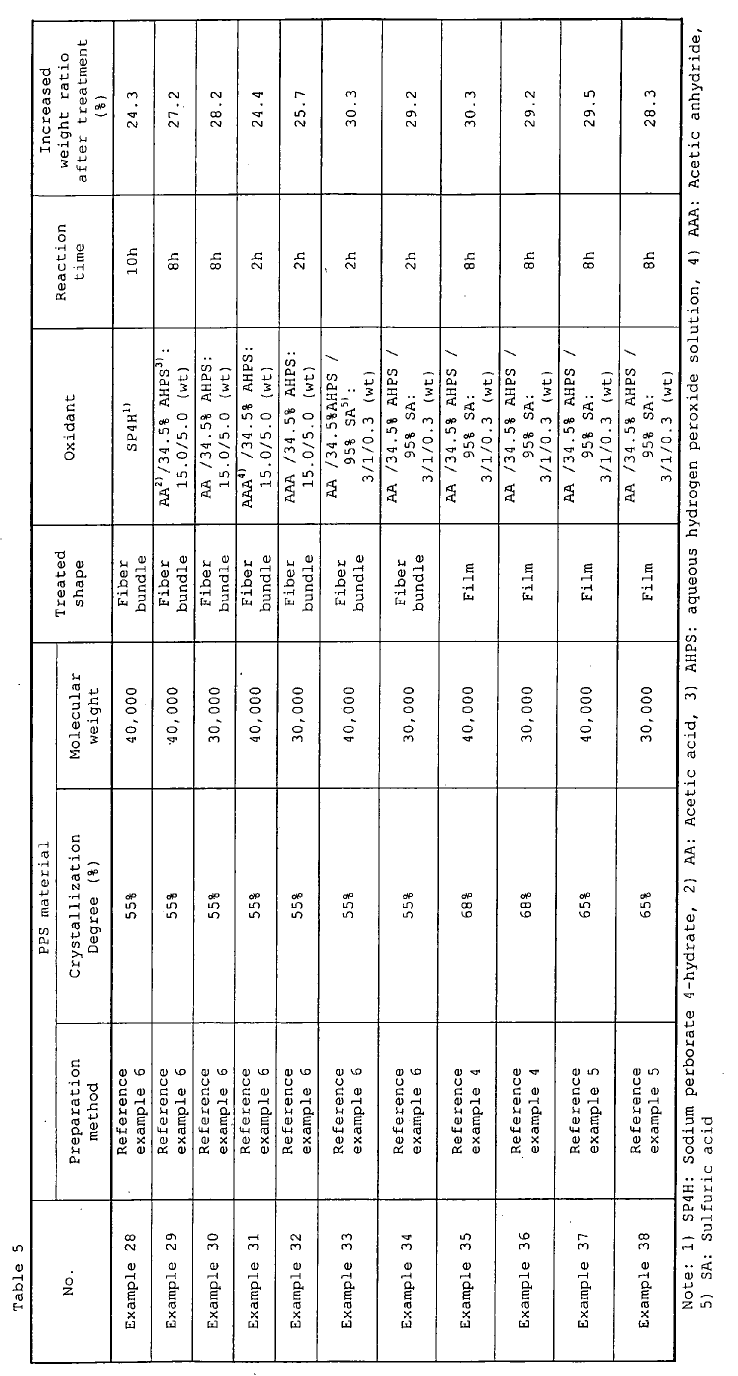

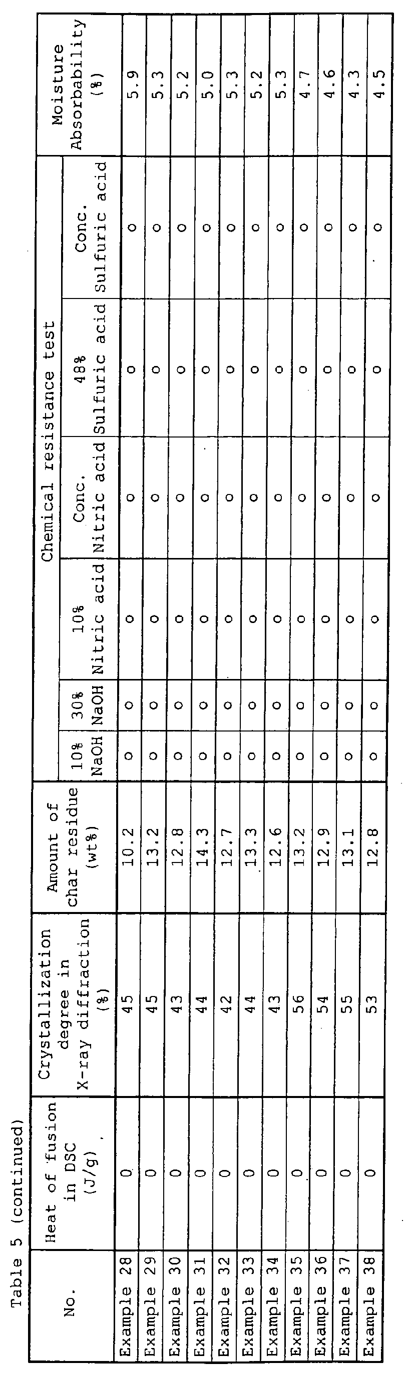

### <Preparation of poly-p-phenylene sulfide resin>

### Reference example 7

8267.0g of 47.5% sodium hydrosulfide (70.0 mol), 2986.7g of 96% sodium hydroxide (71.7 mol), 11434.5g of N-methyl-2-pyrrolidone (NMP) (115.5 mol) and 10500.0g of ion exchanged water were fed to 70 liter autoclave equipped with a stirrer, gradually heated to 230°C in 3 hours while passing nitrogen under normal pressure, and after distilling off 14770.0g of water and 280.0g of NMP, the reactor was cooled to 160°C. The residual water in the reaction system for one mol of fed alkali metal sulfide was 1.08 mol including those consumed by hydrolysis of the NMP. And, an amount of diffused hydrogen sulfide for one mol of fed alkali metal sulfide was 0.015 mol.

Next, 10368.7g of p-dichlorobenzene (p-DCB) (70.5 mol), 9064.4g of NMP (91.6 mol) were added, the reactor was sealed with nitrogen gas, the reaction mixture was heated from 200°C to 270°C at a rate of 0.6°C/min while stirring at 240 rpm, and maintained at 270°C for 50 minutes.

After leaving 50 minutes at 270°C, it was rapidly cooled to around room temperature.

The content in the reactor was taken out and, after filtering by a glass filter, 70 liters of warm water were added and suction filtered. This operation was repeated several times and a PPS cake was obtained. The cake was hot air dried at 80°C, vacuum dried at 120°C to thereby obtain a polyphenylene sulfide. The weight average molecular weight (Mw) of the poly-p-phenylene sulfide at this stage was, as a result of GPC measurement, Mw = 20,000.

### Reference example 8

As a result of carrying out a test in the same way as Reference example 7 except changing the amount of p-DCB to 10338.4g (70.3 mol), a poly-p-phenylene sulfide of weight average molecular weight, Mw = 25,000, was obtained.

### Preparation of poly-p-phenylene sulfide resin composition (preparation of pellets for film production)

### Reference example 9

A slurry in which a calcite type spherical calcium carbonate of an average particle diameter of 1.0 µm is micro-dispersed in ethylene glycol in an amount of 50 wt% was prepared. After filtering this slurry by a filter of 1 µm cut-off, it was mixed with the poly-p-phenylene sulfide powder prepared in Reference example 7 or Reference example 8 by a Henschel mixer so that an amount of the calcium carbonate would be 5.0 wt%. Then, it was fed to a twin screw extruder equipped with 2 vents, melt-kneaded while simultaneously removing the ethylene glycol from the vents, extruded in a gut state and pelletized by cutting after cooling in water.

Furthermore, the poly-p-phenylene sulfide powder prepared by Reference example 7 or Reference example 8 alone was melt-extruded in the same way as the above-mentioned to make a pellet with no particle.

### Preparation of poly-p-phenylene sulfide film

### Reference example 10

The pellet with particle (weight average molecular weight, Mw = 20, 000) and the pellet with no particle (weight average molecular weight, Mw = 20,000) prepared in Reference example 9 were mixed so that an amount of calcium carbonate would be 0.4 wt%. It was made into a crystalline pellet by treating 3 hours under a vacuum. of 3 mmHg (400 Pa) at 150°C in a rotary vacuum drier. Next, this crystalline pellet was fed to a single screw extruder of 90 mm diameter, passed through a filter of filtering accuracy of 10 µm at 330°C, extruded from a stainless steel T-die of lip width 400 mm, slit clearance 1.5 mm and solidified by cooling by a metal drum of which surface was kept at 30°C to thereby obtain an amorphous film of 60 µm thickness.
Crystallization degree by wide angle X-ray diffraction of said films were 56%, and the weight average molecular weight was not changed from those of poly-p-phenylene sulfide powders prepared by Reference example 7 or Reference example 8.

### Reference example 11

The pellet with no particle prepared by Reference example 9 (weight average molecular weight, Mw = 20, 000) was used alone, and it was fed to a single screw extruder of 90 mm diameter in the same way as Reference example 10, passed through a filter of filtering accuracy of 10 µm at 330°C, extruded from a stainless steel T-die of lip width 400 mm, slit clearance 1.5 mm and solidified by cooling by a metal drum of which surface was kept at 30°C to thereby obtain a film of poly-p-phenylene sulfide of 60 µm thickness.

Crystallization degree by wide angle X-ray diffraction of said film was 55%, and the weight average molecular weight was not changed from those of poly-p-phenylene sulfide powders prepared by Reference example 7 or Reference example 8.

### Reference example 12

The pellet with particle (weight average molecular weight, Mw = 40,000) and the pellet with no particle (weight average molecular weight, Mw = 40,000) prepared by Reference example 3 were mixed so that an amount of calcium carbonate would be 0.4 wt%. It was made into a crystalline pellet by treating 3 hours under vacuum of 3 mmHg (400 Pa) at 150°C in a rotary vacuum drier. Next, this crystalline pellet was fed to a single screw extruder of 90 mm diameter, passed through a filter of filtering accuracy of 10 µm at 330°C, extruded from a stainless steel T-die of lip width 400 mm, slit clearance 1.5 mm and solidified by cooling by a metal drum of which surface was kept at 30°C to thereby obtain a film of poly-p-phenylene sulfide of 60 µm thickness.
The weight average molecular weight of said film was not changed from those of poly-p-phenylene sulfide powders prepared in Reference example 1 or Reference example 2, but the crystallization degree by wide angle X-ray diffraction of said film was 6%.

### Reference example 13

By using the pellet with no particle (weight average molecular weight, Mw = 40, 000) prepared in Reference example 3 alone, it was fed to a single screw extruder of 90 mm diameter in the same way as Example 12, passed through a filter of filtering accuracy of 10 µm at 330°C, extruded from a stainless steel T-die of lip width 400 mm, slit clearance 1.5 mm and solidified by cooling by a metal drum of which surface was kept at 30°C to thereby obtain a film of poly-p-phenylene sulfide of 60 µm thickness.

The weight average molecular weight of said film was not changed from that of poly-p-phenylene sulfide powder prepared in Reference example 1 or Reference example 2, but the crystallization degree by wide angle X-ray diffraction was 5%.

### <Preparation of poly-p-phenylene sulfide fiber>

### Reference example 14

Using the pellets with no particle (that of weight average molecular weight, Mw = 20,000 or that of weight average molecular weight, Mw = 25, 000) prepared in Reference example 9, it was extruded from a spinneret at 320°C, an out put of 350g/min, and a taking up speed of 800 m/min, and passed and cooled in a circumstance kept at 23°C to thereby obtain an undrawn yarn of 4375 dtex. Next, this undrawn yarn was heated by rolling onto a group of rolling rolls of surface temperature of 98°C and drawn at a draw ratio of 3.27 and a drawing speed of 120 m/min. It was imparted a crimp of degree of crimp of 13.0 by a successively placed crimper of surface temperature of 90°C. Furthermore, after heat treated by passing through a circumstance kept at 125°C, it was cooled, and further, cut to obtain a poly-p-phenylene sulfide fiber of a fiber thickness (single fiber thickness) of 5.0 dtex and a length of 50 mm to 80 mm.

Crystallization degree by wide angle X-ray diffraction of said fibers were 25% in both cases, and the weight average molecular weights were not changed from those of poly-p-phenylene sulfide powders prepared by Reference example 7 or Reference example 8.

### Comparative example 4

Using 19.8g of the poly-p-phenylene sulfide (PPS) fiber of weight average molecular weight, Mw = 20,000 and crystallization degree 25% prepared by Reference example 14, an oxidation reaction treatment was carried out in the same way as Example 33. The fiber weight increased 31.0%, and 25. 9g of poly-p-phenylene sulfone (PPSO) fiber was obtained. With respect to this fiber, in measurement of differential scanning calorimeter (DSC), the peak of fusion around the melting point of PPS (285°C) disappeared, no peak of fusion was observed at any temperature measured, but the crystallization degree by wide angle X-ray diffraction decreased to almost 0%. As a result of measurement of thermogravimetric analysis (TGA), the amount of char residue was 13. 7 wt% based on the PPSO fiber. And, surprisingly, the moisture absorbability of the PPSO fiber, obtained by oxidizing the PPS fiber of which molecular weight was low and crystallization degree was low, was extremely inferior in moisture absorption resistance as 14.9%.

### Comparative example 5

Changing the PPS fiber to the poly-p-phenylene sulfide (PPS) fiber of weight average molecular weight Mw = 25,000 and crystallization degree 25% prepared by Reference example 14, an oxidation reaction treatment was carried out in the same way as Comparative example 4. The fiber weight increased 30.0%, and 25. 7g of poly-p-phenylene sulfone (PPSO) fiber was obtained. With respect to this fiber, in measurement of differential scanning calorimeter (DSC), the peak of fusion around the melting point of PPS (285°C) disappeared, no peak of fusion was observed at any temperature measured, but the crystallization degree by wide angle X-ray diffraction decreased to almost 0%. As a result of measurement of thermogravimetric analysis (TGA), the amount of char residue was 13.5 wt% based on the PPSO fiber. And, the moisture absorbability was high as 13.0%, and it was found that the moisture absorption resistance is extremely poor.

### Comparative example 6

Changing the PPS fiber to the poly-p-phenylene sulfide (PPS) film of weight average molecular weight Mw = 20,000 and crystallization degree 56% prepared by Reference example 10, an oxidation reaction treatment was carried out in the same way as Comparative example 4. The film weight increased 28.7%, and 25. 5g of poly-p-phenylene sulfone (PPSO) film was obtained. With respect to this film, in measurement of differential scanning calorimeter (DSC), the peak of fusion around the melting point of PPS (285°C) disappeared, no peak of fusion was observed at any temperature measured, but the crystallization degree by wide angle X-ray diffraction decreased to almost 0%. Furthermore, the chemical resistance in concentrated nitric acid showed a rather poor result. And, as a result of measurement of thermogravimetric analysis (TGA), the amount of char residue was 12.9 wt% based on the PPSO film. And it was found, as in this comparative example, that even if a crystallization of PPS film is high, if its molecular weight is low, it showed a high moisture absorbability of 9.0%.

### Comparative example 7

Changing the PPS fiber to the poly-p-phenylene sulfide (PPS) film of weight average molecular weight Mw = 20,000 and crystallization degree 55% prepared by Reference example 11, an oxidation reaction treatment was carried out in the same way as Comparative example 4. The film weight increased 29.6%, and 25.7g of poly-p-phenylene sulfone (PPSO) film was obtained. With respect to this film, in measurement of differential scanning calorimeter (DSC), the peak of fusion around the melting point of PPS (285°C) disappeared, no peak of fusion was observed at any temperature measured, but the crystallization degree by wide angle X-ray diffraction decreased to almost 0%. Furthermore, the chemical resistance in concentrated nitric acid showed a rather poor result. And, as a result of measurement of thermogravimetric analysis (TGA), the amount of char residue was 12.6 wt% based on the PPSO film, and, the moisture absorbability was 9.0%.

### Comparative example 8

Changing the PPS fiber to the poly-p-phenylene sulfide (PPS) film of weight average molecular weight Mw = 40,000 and crystallization degree 6% prepared by Reference example 12, an oxidation reaction treatment was carried out in the same way as Comparative example 4. The film weight increased 30.5%, and 25.8g of poly-p-phenylene sulfone (PPSO) film was obtained. With respect to this film, in measurement of differential scanning calorimeter (DSC), the peak of fusion around the melting point of PPS (285°C) disappeared, no peak of fusion was observed at any temperature measured, but in measurement of crystallization degree by wide angle X-ray diffraction, a peak of crystallization was not observed. And again, the chemical resistance in concentrated nitric acid showed a rather poor result. And, as a result of measurement of thermogravimetric analysis (TGA), the amount of char residue was 13.0 wt% based on the PPSO film. And, the moisture absorbability was 15.0%, and it was found that the PPSO film was poor in moisture absorption resistance.

### Comparative example 9

Changing the PPS fiber to the poly-p-phenylene sulfide (PPS) film of weight average molecular weight, Mw = 40,000 and crystallization degree 5% prepared by Reference example 13, an oxidation reaction treatment was carried out in the same way as Comparative example 4. The film weight increased 31.3%, and 26.0g of poly-p-phenylene sulfone (PPSO) film was obtained. With respect to this film, in measurement of differential scanning calorimeter (DSC), the peak of fusion around the melting point of PPS (285°C) disappeared, no peak of fusion was observed at any temperature measured, but in measurement of crystallization degree by wide angle X-ray diffraction, a peak of crystallization was substantially not observed. Furthermore, the chemical resistance in concentrated nitric acid showed a rather poor result. And, it was such a brittle film as being broken by only a slight touch. And, as a result of measurement of thermogravimetric analysis (TGA), the amount of char residue was 13.2 wt% based on the PPSO film, and the moisture absorbability was 14.9%.

The results of Comparative examples 4 to 9 are shown in Table 6.

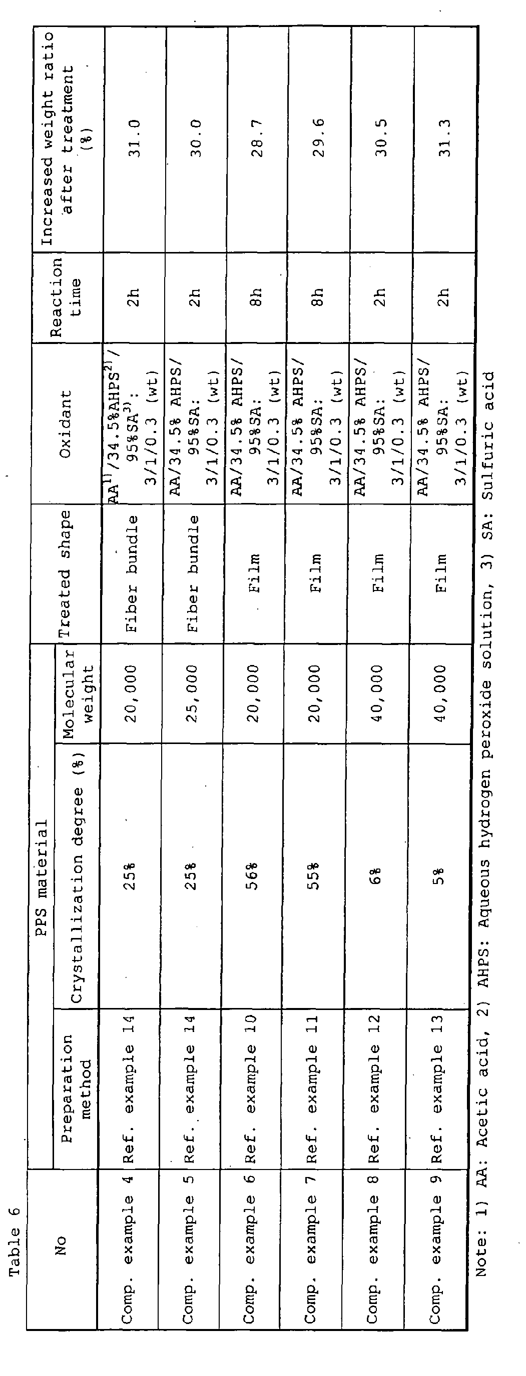

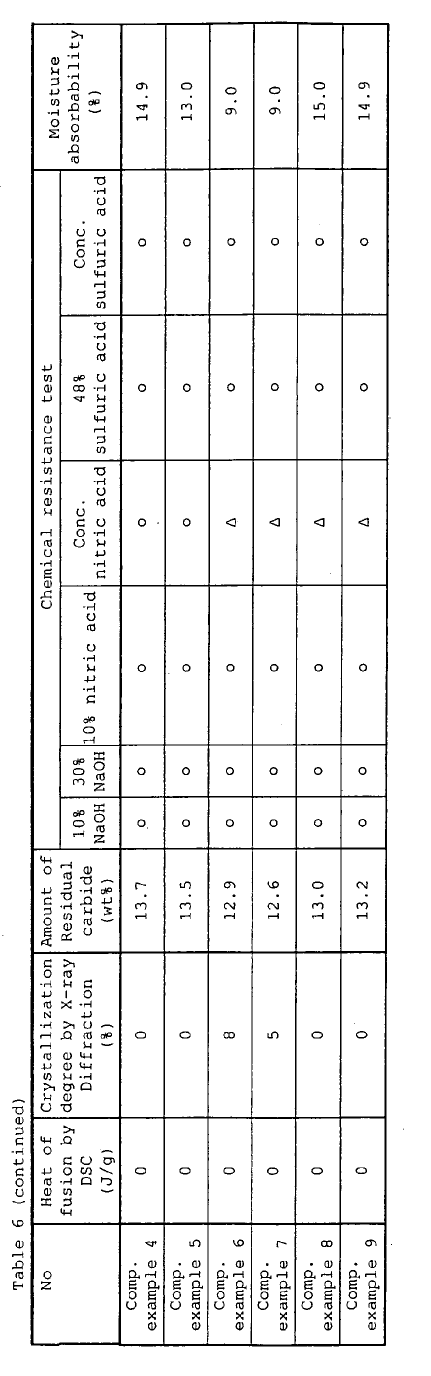

### [Industrial applicability]

Thus obtained polyarylene sulfide oxide has a very high heat resistance and excellent chemical resistances to alkali, concentrated sulfuric acid and concentrated nitric acid, is useful compound for various industrial fields and can be widely used in uses which require heat resistance, chemical resistance, moisture absorption resistance, etc. Concretely, it can be used for a bag filter, a chemical liquid filter, a drier canvas, a paper-making felt, a sewing thread, a heat resistant felt, a filter for foods, a releasing material, a battery separator, a heart patch, an artificial blood vessel, an artificial skin, a material for print substrate, an electrical insulating paper, a chemical filter, an oil filter, an engine oil filter, a copier rolling cleaner, an air cleaning filter, safe clothes, heat resistant clothes, a working robe, athermalwear, aflameproofingwear, anionexchangersubstrate, an oil retainer, a heat insulating material, an electrode separator, a protecting film, a heat insulating material for construction, a cushion material, a liquid absorbing core, a brush, or the like, but not limited thereto.

## Claims

1. A polyarylene sulfide oxide of which a crystallization degree by wide-angle X-ray diffraction measurement is 10% or higher and a heat of fusion by differential scanning calorimeter (DSC) measurement is 15 J/g or less.

2. A polyarylene sulfide oxide according to Claim 1, wherein the crystallization degree by wide-angle X-ray diffraction measurement is 30% or higher and the heat of fusion by differential scanning calorimeter (DSC) measurements is 15 J/g or less.

3. A polyarylene sulfide oxide according to Claim 1 or 2, wherein, by differential scanning calorimeter (DSC) measurement, a peak of fusion is substantially not observed.

4. A polyarylene sulfide oxide according to any one of Claims 1 to 3, wherein a char residue is substantially observed by thermogravimetric analysis (TGA).

5. A polyarylene sulfide oxide according to Claim 4, wherein an amount of the char residue is 1 wt% or more by the thermogravimetric analysis (TGA).

6. A solid article made of the polyarylene sulfide oxide described in any one of Claims 1 to 5, which has a shape selected from a powder, a fiber, a fabric, a film and a paper.

7. A production method of a solid article, wherein a solid article of a polyarylene sulfide oxide, of which a crystallization degree by wide-angle X-ray diffraction measurement is 10% or higher and a heat of fusion by differential scanning calorimeter (DSC) measurement is 15 J/g or less, is produced, while maintaining its shape, by an oxidation reaction treatment of a solid article of polyarylene sulfide compound in a presence of a liquid containing an oxidant.

8. A production method according to Claim 7, wherein the solid article is a fiber or a fabric and a thickness of the fiber constituting the article is 0.1 to 10 dtex.

9. A production method of a solid article according to Claim 7 or 8, wherein the polyarylene sulfide compound is a polyarylene sulfide compound which has physical properties of a crystallization degree of 30% or higher and a weight average molecular weight (Mw) of 30,000 or more, and in said polyarylene sulfide oxide, a peak of fusion can substantially be observed by differential scanning calorimeter (DSC) measurement.

10. A method of producing a solid article according to any one of Claims 7 to 9, wherein a char residue can substantially be observed by thermogravimetric analysis (TGA) of said polyarylene sulfide oxide.

11. A method of producing a solid article according to any one of Claims 7 to 10, wherein the oxidant is at least one selected from an inorganic salt peroxide and an aqueous hydrogen peroxide solution.

12. A method of producing a solid article according to any one of Claims 7 to 11, wherein the liquid contains at least one selected from an organic acid and an organic acid anhydride.

13. A method of producing a solid article according to any one of Claims 7 to 12, wherein the liquid contains a mineral acid.

14. A method of producing a solid article according to any one of Claims 7 to 13, wherein the liquid is a mixture containing water, acetic acid and sulfuric acid, and the oxidant is an aqueous hydrogen peroxide solution.

15. A solid article according to Claim 6, wherein the solid article of the polyarylene sulfide oxide is used in an application selected from filter uses, paper uses and heat resistant working wear uses.

16. A bag filter comprising a fabric of the polyarylene sulfide oxide described in any one of Claims 1 to 5.

17. An electrical insulating paper comprising a paper of the polyarylene sulfide oxide described in any one of Claims 1 to 5.

18. A firewear comprising a fabric of the polyarylene sulfide oxide described in any one of Claims 1 to 5.
